# EUROPÄISCHE PATENTSCHRIFT

(11) **EP 3 548 246 B1**
(45) Veröffentlichungstag und Bekanntmachung des Hinweises auf die Patenterteilung: **12.03.2025**
(21) Anmeldenummer: 17822163.6
(22) Anmeldetag: 01.12.2017
(51) Int. Cl.: B29C 44/58, B29C 44/44, B29C 35/08, B29C 33/38, B29C 31/00, B29C 33/02

(54) **VORRICHTUNG ZUR HERSTELLUNG EINES PARTIKELSCHAUMSTOFFTEILS**
DEVICE FOR PRODUCING A PARTICLE FOAM PART
DISPOSITIF DE FABRICATION D'UN ÉLÉMENT EN MOUSSE DE PARTICULES EXPANSÉES

(30) Priorität: 01.12.2016 DE 102016123214
(43) Veröffentlichungstag der Anmeldung: 09.10.2019
(73) Patentinhaber: Kurtz GmbH & Co. KG, 97892 Kreuzwertheim (DE)
(72) Erfinder: REUBER, Norbert, 97851 Bergrothenfels (DE); KEMMER, Constantin, 97828 Marktheidenfeld (DE); ROMANOV, Victor, 97877 Wertheim (DE)
(74) Vertreter: HGF
(86) Internationale Anmeldenummer: PCT/EP2017/081183
(87) Internationale Veröffentlichungsnummer: WO 2018/100154

(56) Entgegenhaltungen:
- EP-A1- 2 845 705
- EP-A2- 1 990 170
- DE-C- 735 283
- GB-A- 641 842
- US-A- 4 851 167
- US-A- 5 082 436
- US-A- 5 360 330
- US-A- 5 973 308
- US-A1- 2002 130 432
- US-A1- 2003 224 082
- US-A1- 2006 279 014
- US-A1- 2014 243 442
- US-A1- 2016 311 133

## Beschreibung

Die vorliegende Erfindung betrifft eine Vorrichtung zur Herstellung eines Partikelschaumstoffteils.

Aus der WO 2013/05081 A1, das eine Vorrichtung gemäß dem Oberbegriff des Anspruchs 1 offenbart, geht ein Verfahren zur Herstellung von Partikelschaumstoffteilen hervor, bei welchen eine Mischung aus Schaumstoffpartikeln und dielektrischer Transferflüssigkeit mittels elektromagnetischer Wellen erhitzt wird, um die Schaumstoffpartikel zu einem Partikelschaumstoffteil zu verschmelzen. Als elektromagnetische Wellen werden Radiowellen oder Mikrowellen verwendet. Das Material der Schaumstoffpartikel ist aus Polypropylen (PP) ausgebildet.

Aus der US 3,060,513 geht ein Verfahren zum Sintern von feuchten thermoplastischen Schaumstoffpartikel hervor. Die Partikel werden dielektrisch erhitzt und gleichzeitig in der Form komprimiert. Es werden elektromagnetische Wellen bei einer Frequenz von etwa 2 bis 1000 MHz angelegt.

Ein ähnliches Verfahren ist in der US 3,242,238 beschrieben, bei welchen Schaumstoffpartikel mit einer wässrigen Lösung befeuchtet werden und einem elektromagnetischen Feld mit einer Frequenz von etwa 5 bis 100 MHz ausgesetzt sind.

In der GB 1,403,326 ist ein Verfahren zum Verschweißen von expandierbaren Polystyrolschaumstoffpartikel beschrieben, bei welchem die Partikel mit einer wässrigen Lösung befeuchtet werden und einem elektromagnetischen Feld von 5 bis 2000 MHz ausgesetzt werden.

Aus der WO 01/64414 A1 geht ein weiteres Verfahren hervor, bei dem Polymerpartikel aus Polyolefinen, die mit einem flüssigen Medium benetzt sind, mit elektromagnetischen Wellen, insbesondere Mikrowellen erhitzt werden. Hierbei wird die Temperatur im Formwerkzeug mittels Steuern des darin befindlichen Druckes geregelt.

Bei den oben erläuterten Verfahren werden jeweils feuchte Schaumstoffpartikel mit elektromagnetischen Wellen erhitzt, wobei die elektromagnetische Energie von der Flüssigkeit absorbiert und auf die Partikel übertragen wird.

Aus der US 5,128,073 gehen thermoplastische Partikel hervor, die mit einem Hochfrequenzenergie absorbierenden Material beschichtet sind. Diese Partikel können mit elektromagnetischen Wellen erhitzt werden, wobei die Beschichtung die elektromagnetische Energie aufgibt und auf die Schaumstoffpartikel abgibt. Zum Verschweißen der Schaumstoffpartikel werden elektromagnetische Wellen im Bereich vom 40 MHz bis 2450 MHz verwendet.

Diese Verfahren sind seit Jahrzehnten bekannt. Dennoch konnten sie sich in der Praxis nicht durchsetzen. Hierfür gibt es unterschiedliche Gründe. Bei Labormustern funktionieren diese Verfahren sehr gut. Der Übergang in die industrielle Produktion ist bisher jedoch nicht geglückt. Ein wesentlicher Grund hierfür ist, dass die Wärme nicht gleichmäßig in die Schaumstoffpartikel eingebracht werden kann. Hierdurch erhält man keine gleichmäßige Verschweißung im Partikelschaumstoffteil.

In der Praxis werden daher fast ausschließlich Schaumstoffpartikel mittels gesättigtem Trockendampf verschweißt, wie es bspw. aus der WO 2014/128214 A1 bekannt ist. Gegenüber dem Verschweißen mit Dampf konnte sich das Verschweißen mittels elektromagnetischer Wellen in der Praxis nie durchsetzen, obwohl das Verschweißen von elektromagnetischen Wellen prinzipbedingt erhebliche Vorteile hätte. Bei elektromagnetischen Wellen könnte die Energie wesentlich gezielter übertragen werden, wodurch es nicht notwendig wäre, Hilfskörper zu erhitzen. Bei der Verwendung von Dampf muss dieser zunächst in einem Dampfgenerator erzeugt werden. Dann muss der Dampf über Leitungen dem Werkzeug zugeführt werden. Alle diese Teile müssen auf eine ausreichend hohe Temperatur erhitzt werden, so dass der Dampf hierin nicht kondensiert. Dies verursacht einen erheblichen Wärmeverlust. Zudem beanspruchen die Geräte zur Dampferzeugung und Dampfleitung den meisten Bauraum an der Vorrichtung zur Herstellung des Partikelschaumstoffteils. Wenn man keinen Dampf zum Verschweißen der Schaumstoffpartikel benötigen würde, dann könnte man die gesamte Vorrichtung wesentlich kompakter ausbilden.

Der Erfindung liegt die Aufgabe zugrunde eine Vorrichtung zur Herstellung eines Partikelschaumstoffteils zu schaffen, mit welchem expandierbare thermoplastische Schaumstoffpartikel effizient und zuverlässig verschweißt werden können.

Die Aufgabe wird durch den Gegenstand des unabhängigen Patentanspruchs gelöst. Vorteilhafte Ausgestaltungen sind in den jeweiligen Unteransprüchen angegeben.

Eine Vorrichtung zur Herstellung eines Partikelschaumstoffteils nach einem ersten Aspekt der vorliegenden Erfindung umfasst
- ein Formwerkzeug, das einen Formraum begrenzt, wobei benachbart zum Formraum zumindest zwei Kondensatorplatten angeordnet sind, welche mit einer Strahlungsquelle für elektromagnetische Strahlung verbunden sind, wobei die Strahlungsquelle für elektromagnetische Strahlung zum Abgeben von elektromagnetischer Strahlung ausgebildet ist, und
- das Formwerkzeug zumindest aus zwei Formhälften ausgebildet ist, wobei zumindest eine der beiden Formhälften aus einem elektrisch leitenden Material ausgebildet ist und eine der Kondensatorplatten bildet.

Dadurch, dass eine der Formhälften des Formwerkzeuges aus einem elektrisch leitenden Material ausgebildet ist und eine der Kondensatorplatten bildet, befindet sich diese Kondensatorplatte in unmittelbarer Nähe zum Formraum. Hierdurch werden Verluste gering gehalten und die zum Verschweißen von Schaumstoffpartikel notwendige elektrische Leistung begrenzt.

Das elektrisch leitende Material ist vorzugsweise ein Metall, insbesondere Aluminium, Kupfer oder eine entsprechende Legierung. Die Formhälfte ist entsprechend dem Formraum konturiert. Eine solche elektrisch leitende Formhälfte kann sich von herkömmlichen Kondensatorplatten durch ihre Konturierung unterscheiden. Herkömmliche Kondensatorplatten sind ebenflächig ausgebildet.

Es können auch beide Formhälften aus einem elektrisch leitenden Material ausgebildet sein und jeweils eine der Kondensatorplatten bilden, wobei zumindest in dem Bereich, in welchem sich die beiden Formhälften berühren, eine Isolationsschicht zum elektrischen Isolieren der beiden Formhälften angeordnet ist.

Vorzugsweise ist die zumindest eine elektrisch leitende Formhälfte an ihrer den Formraum begrenzenden Seite mit einer Kunststoffschicht versehen. Vorzugsweise weist die Kunststoffschicht eine maximale Dicke von 1 cm auf.

Die Kunststoffschicht ist vorzugsweise aus einem für die elektromagnetische Strahlung nicht transparentem Material ausgebildet. Das Material ist vorzugsweise so gewählt, dass es einen ähnlichen elektrischen Verlustfaktor aufweist, wie die mit dem Formwerkzeug zu verschweißenden Schaumstoffpartikel. Hierdurch wird eine gleichmäßige Aufhitzung im gesamten Formraum erzielt, da sich die Schaumstoffpartikel und die Kunststoffschicht, welche die Schaumstoffpartikel begrenzt, aufgrund der elektromagnetischen Strahlung gleichmäßig erwärmen.

An die zumindest eine elektrisch leitende Formhälfte kann ein Füllinjektor gekoppelt sein. Ein solcher Füllinjektor ist in der Regel aus einem elektrisch leitenden Metall ausgebildet. Die mit dem Füllinjektor verbundene elektrisch leitende Formhälfte wird dann vorzugsweise zusammen mit dem Füllinjektor elektrisch mit Masse verbunden.

Eine Vorrichtung zur Herstellung eines Partikelschaumstoffteils nach einem weiteren Aspekt der vorliegenden Erfindung umfasst
- ein Formwerkzeug, das einen Formraum begrenzt, wobei benachbart zum Formraum zumindest zwei Kondensatorplatten angeordnet sind, welche mit einer Strahlungsquelle für elektromagnetische Strahlung verbunden sind, wobei die Strahlungsquelle für elektromagnetische Strahlung zum Abgeben von elektromagnetischer Strahlung ausgebildet ist, und
- das Formwerkzeug zumindest aus zwei Formhälften ausgebildet ist, wobei eine der Formhälften eine Durchgangsöffnung zum Zuführen von Schaumstoffpartikel und/oder eine Durchgangsöffnung zum Entweichen von Luft aufweist, wobei die Durchgangsöffnung in geschlossenem Zustand des Formwerkzeuges von der anderen Formhälfte verdeckt wird.

Durch das Verdecken der Durchgangsöffnung mittels der jeweils anderen Formhälfte ist es nicht notwendig, einen Schließmechanismus an der Durchgangsöffnung vorzusehen, da diese Durchgangsöffnung im geschlossenen Zustand des Formwerkzeuges von der anderen Formhälfte abgedeckt und damit verschlossen ist. An diesen Durchgang kann ein Füllinjektor angeschlossen sein, der sich gegenüber herkömmlichen Füllinjektoren dadurch unterscheidet, dass er keinen Schließmechanismus zum Verschließen der in den Formraum mündenden Öffnung aufweist. Hierdurch kann der Füllinjektor wesentlich einfacher als bei herkömmlichen Vorrichtung zum Herstellen von Partikelschaumstoffteilen ausgebildet sein.

Die Durchgangsöffnung bzw. die Durchgangsöffnungen sind vorzugsweise an der Formhälfte an einem Abschnitt angeordnet, der in geschlossenem Zustand des Formwerkzeuges von der anderen Formhälfte überdeckt wird und bei teilweise geöffnetem Formwerkzeug freiliegt, wobei die beiden Formhälften des Formwerkzeuges in diesem teilweise geöffnetem Zustand noch ineinandergreifen und einen vergrößerten Formraum ohne Öffnungen - mit Ausnahme des oder der Durchgänge - nach außen bilden. In diesem teilweise geöffnetem Zustand des Formwerkzeuges kann der Formraum mit Schaumstoffpartikeln gefüllt werden, die aufgrund der geschlossenen Geometrie des Formraumes nicht entweichen können. Dieser teilweise geöffnete Zustand des Formwerkzeuges bildet einen sogenannten Crackspalt, weshalb dieser Zustand auch als Crackspaltstellung des Formwerkzeuges bezeichnet werden kann.

Die Vorrichtung zur Herstellung eines Partikelschaumstoffteils nach einem weiteren Aspekt der vorliegenden Erfindung umfasst
- ein Formwerkzeug, das einen Formraum begrenzt, wobei benachbart zum Formraum zumindest zwei Kondensatorplatten angeordnet sind, welche mit einer Strahlungsquelle für elektromagnetische Strahlung verbunden sind, wobei die Strahlungsquelle für elektromagnetische Strahlung zum Abgeben von elektromagnetischer Strahlung ausgebildet ist, und
- das Formwerkzeug zumindest aus zwei Formhälften ausgebildet ist, wobei
- zumindest eine der Formhälften aus einem elektrisch nicht-leitenden Material ausgebildet ist und eine Entgasungsöffnung zum Entweichen von Luft aufweist, wobei die EntgasungsÖffnung mittels eines Entgasungseinsatzes bündig mit dem Formraum abgeschlossen ist, wobei der Entgasungseinsatz aus einem elektrisch nicht-leitendem Material ausgebildet oder parallel zu den Kondensatorplatten angeordnet ist.

Der Entgasungseinsatz kann ein plattenförmiges Element mit kleinen Löchern sein, welche für Luft, jedoch nicht für die Schaumstoffpartikel durchlässig sind. Die Schaumstoffpartikel weisen in der Regel einen Durchmesser von 3 bis 5 mm auf, wenn sie dem Formwerkzeug zugeführt werden. Die Löcher des Entgasungseinsatzes sind deshalb mit einem Durchmesser von nicht mehr als 2 mm und vorzugsweise nicht mehr als 1 mm ausgebildet. Der Entgasungseinsatz kann aus Kunststoff ausgebildet sein. Derartige Entgasungseinsätze können an beliebigen Stellen am Formwerkzeug bzw. an der Formhälfte angeordnet sein. Der Entgasungseinsatz kann jedoch auch aus Metall ausgebildet sein. Bei metallischen Entgasungseinsätzen ist es zweckmäßig sie an Orten einzusetzen, an welchen sie in etwa parallel zu den Kondensatorplatten angeordnet sind. Ein solcher plattenförmiger Entgasungseinsatz, der etwa parallel zu den Kondensatorplatten angeordnet ist, hat kaum oder nur geringen Einfluss auf das durch die Kondensatorplatten erzeugte elektrische Feld, da sich der Entgasungseinsatz in etwa quer zu den Feldlinien erstreckt.

Der Entgasungseinsatz kann auch aus gesintertem, porösem Material ausgebildet sein. Es kann ein gesinterter Kunststoff-, Keramik- oder Metallkörper sein. Ein gesinterter Metallkörper ist aufgrund seines Einflusses auf die Feldlinien des elektrischen Feldes nur begrenzt verwendbar.

Die Formhälfte kann mehrere solche Entgasungsöffnungen aufweisen.

Eine Vorrichtung zur Herstellung eines Partikelschaumstoffteils nach einem weiteren Aspekt der vorliegenden Erfindung umfasst
- ein Formwerkzeug, das einen Formraum begrenzt, wobei benachbart zum Formraum zumindest zwei Kondensatorplatten angeordnet sind, welche mit einer Strahlungsquelle für elektromagnetische Strahlung verbunden sind, wobei die Strahlungsquelle für elektromagnetische Strahlung zum Abgeben von elektromagnetischer Strahlung ausgebildet ist, und
- dass zumindest an einer der Kondensatorplatten eine der Formhälften befestigt ist und diese Kondensatorplatte mittels mehrerer auf Druck belastbarer Isolierkörper an einem Gehäuse befestigt ist, wobei zumindest einer der Isolierkörper an einer Rückseite und ein weiterer Isolierkörper an einer Vorderseite der Kondensatorplatte derart angeordnet ist, dass sowohl beim Öffnen als auch beim Schließen des Formwerkzeuges die Isolierkörper ausschließlich auf Druck und nicht auf Zug belastet werden.

Derartige Isolierkörper können in der Regel einen hohen Druck aufnehmen. Sie sind jedoch gegenüber Zug sehr empfindlich und können leicht brechen. Insbesondere bei großvolumigen Formwerkzeugen treten hohe Druckkräfte beim Schließen und beim Erzeugen des Partikelschaumstoffteils, wobei die beiden Formhälften mit einem hohen Druck aneinandergedrückt werden, als auch erhebliche Zugkräfte beim Öffnen des Formwerkzeuges auf. Durch eine solche Anordnung der Isolierkörper ist sichergestellt, dass diese nicht fehlbelastet werden und auf Dauer die Kondensatorplatte zuverlässig halten.

Vorzugsweise sind mehrere Isolierkörper zwischen der Kondensatorplatte und dem Gehäuse angeordnet, um die beim Schließen und während des Betriebes auftretenden Druckkräfte aufzunehmen.

Vorzugsweise ist zumindest ein weiterer Isolierkörper zum Halten der einen Kondensatorplatte vorgesehen, wobei dieser weitere Isolierkörper sich in eine Richtung quer zur Öffnungs- bzw. Schließrichtung des Formwerkzeuges erstreckt. Mit diesem Isolierkörper werden seitlich an der Kondensatorplatte wirkende Kräfte auf das Gehäuse abgeleitet.

Die zumindest eine Kondensatorplatte ist elektrisch mit der Strahlungsquelle verbunden und die Strahlungsquelle ist derart ausgebildet, dass an der Kondensatorplatte elektromagnetische Wellen mit einer Amplitude von zumindest 1 kV anliegen. An der Kondensatorplatte können elektromagnetische Wellen mit einer Amplitude von zumindest 5 kV bzw. zumindest 10 kV bzw. zumindest 20 kV anliegen.

Eine Vorrichtung zur Herstellung eines Partikelschaumstoffteils nach einem weiteren Aspekt der vorliegenden Erfindung umfasst
- ein Formwerkzeug, das einen Formraum begrenzt, wobei benachbart zum Formraum zumindest zwei Kondensatorplatten angeordnet sind, welche einen Werkzeugkondensator bilden und mit einer Strahlungsquelle für elektromagnetische Strahlung verbunden sind, wobei die Strahlungsquelle für elektromagnetische Strahlung zum Abgeben von elektromagnetischer Strahlung ausgebildet ist, wobei
- eine Spannungsmesseinrichtung zum Messen der am Werkzeugkondensator anliegenden elektrischen Spannung vorgesehen ist, und die Spannungsmesseinrichtung mit einer Steuereinrichtung zum Regeln der elektrischen Leistung anhand der gemessenen Spannung verbunden ist.

Die tatsächlich am Kondensator abfallende elektrische Spannung erlaubt eine sehr präzise Abschätzung der in den Kunststoff eingebrachten Wärmeleistung, da die elektrische Energie und damit die elektrische Leistung proportional zum Quadrat der Spannung ist. Hierdurch kann die den Partikelschaumstoff zugeführte Leistung auf einfache Art sehr präzise geregelt werden. Vorzugsweise ist ein Spannungsteiler aus einem Trennkondensator und einem Messkondensator vorgesehen, welche eine Reihenschaltung bilden, wobei die Reihenschaltung parallel zum Werkzeugkondensator geschaltet ist. Die Spannungsmesseinrichtung greift die am Messkondensator anliegende Spannung ab. Die Kapazität des Trennkondensators ist vorzugsweise kleiner als die Kapazität des Messkondensators. Insbesondere ist die Kapazität des Trennkondensators nicht größer als 1/100, vorzugsweise nicht größer als 1/1.000 und insbesondere nicht größer als 1/10.000 der Kapazität des Messkondensators. Hierdurch liegt am Messkondensator eine Spannung an, die einen vorbestimmten Bruchteil der am Werkzeugkondensator anliegenden Spannung beträgt. Dieser Bruchteil wird durch das Verhältnis der Kapazitäten des Trennkondensators und des Messkondensators bestimmt.

Parallel zum Messkondensator ist vorzugsweise eine Diode geschaltet, welche das Spannungssignal am Messkondensator gleichrichtet.

Der Trennkondensator besitzt vorzugsweise eine hohe Spannungsfestigkeit und eine geringe elektrische Kapazität. Der Trennkondensator kann an Isolationskörpern zum Befestigen einer der Kondensatorplatten an einem Gehäuse der Vorrichtung ausgebildet sein, wobei der Isolationskörper zwischen zwei Kondensatorplatten des Trennkondensators angeordnet ist.

Eine Vorrichtung zur Herstellung eines Partikelschaumstoffteils nach einem weiteren Aspekt der vorliegenden Erfindung umfasst
- ein Formwerkzeug, das einen Formraum begrenzt, wobei benachbart zum Formraum zumindest zwei Kondensatorplatten angeordnet sind, welche mit einer Strahlungsquelle für elektromagnetische Strahlung verbunden sind, wobei die Strahlungsquelle für elektromagnetische Strahlung zum Abgeben von elektromagnetischer Strahlung ausgebildet ist, und
- die elektromagnetische Strahlungsquelle einen Generatorschwingkreis bildet und Leitungen zum Führen der elektromagnetischen Wellen zusammen mit dem, den Formraum umschließenden Kondensator einen Werkzeugschwingkreis bildet, wobei zumindest einer der beiden Schwingkreise durch Verändern einer Induktivität oder einer Kapazität abstimmbar ist, wobei eine Steuereinrichtung vorgesehen ist, die derart ausgebildet ist, dass die Leistungszufuhr vom Generatorschwingkreis auf den Werkzeugschwingkreis durch Abstimmen des abstimmbaren Schwingkreises gesteuert wird.

Besitzen die beiden Schwingkreise die gleiche Resonanzfrequenz, dann wird die maximale Leistung vom Generatorschwingkreis auf den Werkzeugschwingkreis übertragen. Je stärker sich die Resonanzfrequenz unterscheiden, desto geringer ist die Leistungsübertragung. Somit kann durch Verändern der Resonanzfrequenz eines der Schwingkreise die Leistungsübertragung dementsprechend verändert werden.

Die Induktivitäten der beiden Schwingkreise werden vor allem durch die Längen der Leitungen zum Übertragen der elektromagnetischen Wellen beeinflusst. Diese Leitungen sind in der Regel Koaxialleitungen bzw. Hohlleiter. Durch Zuschalten von Leitungsabschnitten in unterschiedlicher Länge kann die Induktivität und damit die Resonanzfrequenz eines Schwingkreises verändert werden. Im Generatorschwingkreis kann auch ein Kondensator vorgesehen sein, bei dem der Abstand der Kondensatorplatten variiert werden kann, um die Kapazität des Generatorschwingkreises zu verändern. Vorzugsweise ist ein Motor zum Einstellen des Abstandes der Kondensatorplatten vorhanden.

Die maximal übertragbare Leistung liegt im Bereich von 25 kW bis 60 kW. Dies hängt von der Dimensionierung des Generators und der Leitungen, mit welchen der Generatorschwingkreis mit dem Werkzeugschwingkreis verbunden ist, ab.

Eine Vorrichtung zur Herstellung eines Partikelschaumstoffteils nach einem weiteren Aspekt der vorliegenden Erfindung weist ein Formwerkzeug auf, das einen Formraum begrenzt, wobei benachbart zum Formraum zumindest zwei Kondensatorplatten angeordnet sind, welche mit einer Strahlungsquelle für elektromagnetische Strahlung verbunden sind, wobei die Strahlungsquelle für elektromagnetische Strahlung zum Abgeben von elektromagnetischer Strahlung ausgebildet ist, und
das Formwerkzeug zumindest zwei Formhälften aufweist, wobei zumindest eine der beiden Formhälften des Formwerkzeuges zumindest teilweise aus einem Verbundmaterial ausgebildet ist, das ein aus Kunststoff ausgebildetes Matrixmaterial und im Matrixmaterial eingebettete Körper aufweist, wobei die eingebetteten Körper aus einem Material ausgebildet sind, das Wärme besser als das Matrixmaterial aus Kunststoff leitet.

Die eingebetteten Körper sind vorzugsweise Partikel oder Fasern, welche vollständig in dem Matrixmaterial eingebettet sind. Die Partikel besitzen vorzugsweise eine maximale Größe von 3 mm, insbesondere eine maximale Größe von 2 mm oder vorzugsweise eine maximale Größe von 1 mm. Die Fasern besitzen vorzugsweise eine maximale Länge von 20 mm, insbesondere eine maximale Länge von 10 mm und vorzugsweise eine maximale Länge von 5 mm.

Das Matrixmaterial ist vorzugsweise aus einem nicht-elektrisch leitenden Kunststoff, wie zum Beispiel einem Epoxydharz, ausgebildet, in dem die eingebetteten Körper vollständig umschlossen sind. Sind die eingebetteten Körper plus Matrixmaterial voneinander separiert, dann können die eingebetteten Körper aus einem elektrisch leitenden Material ausgebildet sein. Falls die eingebetteten Körper aus einem elektrisch leitenden Material ausgebildet sind, dann ist es zweckmäßig, wenn die eingebetteten Körper Fasern sind, diese parallel zur jeweils benachbarten Kondensatorplatte anzuordnen. Sind hingegen die eingebetteten Körper elektrisch nicht-leitend ausgebildet, dann kann deren Anordnung im Matrixmaterial beliebig gewählt werden.

Die eingebetteten Körper sind insbesondere aus mineralischen Stoffen, wie z.B. Quarzsand, einem Keramikmaterial, Aluminiumoxid, Aluminiumnitrid, Glasgranulate, Fritten, Siliziumcarbid und/oder Magnesiumoxid ausgebildet. Die eingebetteten Körper können auch Glasfasern oder Karbonfasern sein. Karbonfasern sind in der Regel elektrisch leitend, weshalb sie vorzugsweise parallel zur benachbarten Kondensatorplatte im Matrixmaterial anzuordnen sind.

Magnesiumoxid besitzt eine hohe Wärmekapazität, womit das Formwerkzeug die in das Partikelschaumstoffteil beim Schweißen eingebrachte Wärme schnell aufnehmen kann und das Partikelschaumstoffteil rasch kühlt.

Das Verbundmaterial aus dem Matrixmaterial und den darin eingebetteten Körpern ist vorzugsweise aus Materialien ausgebildet, die RF-Strahlung nicht oder kaum absorbieren. Dieses Verbundmaterial beeinflusst daher die RF-Strahlung nicht oder nur geringfügig. Aufgrund der gut wärmeleitenden eingebetteten Körper kann das Verbundmaterial jedoch im Formraum befindliche Wärme zügig ableiten.

Eine Formhälfte, die ein solches Verbundmaterial aufweist, ist vorzugsweise an ihrer, den Formraum begrenzenden Seite mit einer Schicht versehen, die RF-Strahlung stärker als das Verbundmaterial absorbiert. Hierdurch wird die Formhälfte beim Anlegen elektromagnetischer Strahlung im Bereich angrenzend zum Formraum erhitzt, wodurch die sich im Formraum befindlichen Schaumstoffpartikel gleichmäßig erhitzt werden können. Insbesondere weist diese Schicht einen ähnlichen elektrischen Verlustfaktor auf, wie die mit dem Formwerkzeug zu verschweißenden Schaumstoffpartikel.

Die an der den Formraum begrenzenden Seite des Formwerkzeuges angeordnete Schicht ist vorzugsweise eine Kunststoffschicht. Die Kunststoffschicht kann bspw. aus PET (Polyethylenterephthalat), PEEK (Polyetherketon), POM (Polyoxymethylen), Polyimid und PMMA (Polymethylmethacrylat) ausgebildet sein.

Die Vorrichtung zur Herstellung eines Partikelschaumstoffteils nach einem weiteren Aspekt der vorliegenden Erfindung umfasst
ein Formwerkzeug, das einen Formraum begrenzt, wobei benachbart zum Formraum zumindest zwei Kondensatorplatten angeordnet sind, welche mit einer Strahlungsquelle für elektromagnetische Strahlung verbunden sind, wobei die Strahlungsquelle für elektromagnetische Strahlung zum Abgeben von elektromagnetischer Strahlung ausgebildet ist, und
das Formwerkzeug zumindest aus zwei Formhälften ausgebildet ist, wobei zumindest eine der Formhälften des Formwerkzeuges an ihrer den Formraum begrenzenden Seite mit Bereichen ausgebildetist, welche unterschiedlich stark elektromagnetische Strahlung absorbieren, so dass sich beim Anlegen von elektromagnetischer Strahlung der stärker elektromagnetische Strahlung absorbierende Bereich derart erhitzt, dass in diesem Bereich eine Oberfläche eines herzustellenden Partikelschaumstoffteils stärker als im übrigen Bereich aufgeschmolzen wird. Dieser stärker elektromagnetische Strahlung absorbierende Bereiche kann mit der Form eines bestimmten Zeichens, Logos oder dergleichen ausgebildet sein, so dass in das fertige Partikelschaumstoffteil diese Form durch Aufschmelzen der Oberfläche des Partikelschaumstoffteils eingeprägt ist. Hierdurch kann am Partikelschaumstoffteil eine Markierung vorgesehen werden, ohne dass hierzu ein separater Verfahrensschritt notwendig ist.

Der Bereich des Formwerkzeuges, der elektromagnetische Strahlung stärker absorbiert, kann beispielsweise mit einem Material mit höherer Dichte als im übrigen Bereich ausgebildet sein. Dieser Bereich kann auch alternativ oder in Kombination aus einem Material mit höherer Dicke oder aus einem anderen Material, das elektromagnetische Strahlung grundsätzlich besser absorbiert, ausgebildet sein.

Die Vorrichtung zur Herstellung eines Partikelschaumstoffteils nach einem weiteren Aspekt der vorliegenden Erfindung umfasst
ein Formwerkzeug, das einen Formraum begrenzt, wobei benachbart zum Formraum zumindest zwei Kondensatorplatten angeordnet sind, welche mit einer Strahlungsquelle für elektromagnetische Strahlung verbunden sind, wobei die Strahlungsquelle für elektromagnetische Strahlung zum Abgeben von elektromagnetischer Strahlung ausgebildet ist, und das Formwerkzeug mit Kühlrippen versehen ist.

Durch das Vorsehen der Kühlrippen kann ein solches Formwerkzeug schneller gekühlt werden, insbesondere wenn mit einem Ventilator ein Kühlluftstrom auf das Formwerkzeug gerichtet wird.

Ein solches Formwerkzeug weist vorzugsweise zwei Formhälften auf, welche mittels einer Presse zur Ausbildung des Formraums zusammengedrückt werden können, wobei eine jede Formhälfte eine Pressfläche aufweist, an welcher die Presse angreifen kann. Die Kühlrippen sind an Bereichen außerhalb der jeweiligen Pressfläche an den Formhälften ausgebildet.

Die oben erläuterten Aspekte können einzeln oder auch in beliebigen Kombinationen realisiert sein.

Für alle oben erläuterten Aspekte gilt, dass die elektromagnetische Strahlung RF-Strahlung sein kann.

Weiterhin kann grundsätzlich bei allen Ausführungen eine der beiden Kondensatorplatten elektrisch mit Masse verbunden sein. Die andere Kondensatorplatte ist direkt mit der Strahlungsquelle verbunden, wobei die Strahlung als elektromagnetische Wellen gegenüber Masse dieser Kondensatorplatte zugeführt werden.

Vorzugsweise wird die oben erläuterte Spannungsmessung in Verbindung mit der Steuerung der Leistungsübertragung mittels der Anpassung des Generatorschwingkreises und des Werkzeugschwingkreises verwendet, da die Spannung proportional zur Anpassung der beiden Schwingkreise ist, d.h., dass bei übereinstimmender Resonanzfrequenz der beiden Schwingkreise die Spannung am höchsten ist und umso stärker abnimmt, je stärker sich die Resonanzfrequenzen der beiden Schwingkreise unterscheiden.

Eine Vorrichtung zur Herstellung eines Partikelschaumstoffteils nach einem weiteren Aspekt der Erfindung umfasst
- ein Formwerkzeug, das einen Formraum begrenzt, wobei benachbart zum Formraum zumindest zwei Kondensatorplatten angeordnet sind, welche mit einer Strahlungsquelle für elektromagnetische Strahlung verbunden sind, wobei die Strahlungsquelle für elektromagnetische Strahlung zum Abgeben von elektromagnetischer Strahlung ausgebildet ist, und
- die Vorrichtung mehrere Arbeitsstationen umfasst, zwischen welchen mehrere Formwerkzeuge im Kreislauf befördert werden, wobei zumindest folgende Arbeitsstationen vorgesehen sind:
- eine Füllstation, an welcher das Formwerkzeug mit Schaumstoffpartikel gefüllt wird,
- eine Schweißstation, an welche die im Formwerkzeug befindlichen Schaumstoffpartikel mittels elektromagnetischer Strahlung verschweißt werden,
- zumindest eine oder mehrere Abkühl- bzw. Stabilisierstationen zum Abkühlen des verschweißten Partikelschaumstoffteils, und
- eine Entformstation.

Vorzugsweise ist die Transporteinrichtung derart ausgebildet, dass mehrere Formwerkzeuge im Kreislauf befördert werden.

Die Vorrichtung kann einen Abkühlbereich entlang der Transporteinrichtung aufweisen, wobei der Abkühlbereich zum gleichzeitigen Aufnehmen mehrerer Formwerkzeuge ausgebildet ist.

Da das Formwerkzeug oftmals aus Kunststoff ausgebildet ist, der Wärme schlecht leitet, ist es zweckmäßig, nach dem Verschweißen des Partikelschaumstoffteils dieses eine längere Zeit abkühlen zu lassen, bevor es entformt werden kann. Mit einer solchen Vorrichtung, die das Formwerkzeug im Kreislauf befördert, können die einzelnen Arbeitsstationen, insbesondere die Schweißstation, optimal ausgelastet werden. Ein Schweißvorgang dauert etwa 30 Sekunden bis 2 Minuten. Die Dauer des Schweißvorganges hängt von der Größe des herzustellenden Partikelschaumstoffteils, dem Material des Partikelschaumstoffteils und der eingebrachten Leistung ab. Im Vergleich zu herkömmlichen Vorrichtungen zur Herstellung eines Partikelschaumstoffteils, bei welchen die Schaumstoffpartikel ausschließlich mit Dampf verschweißt werden, ist der Verschweißvorgang sehr kurz. Deshalb kann eine solche Maschine im Vergleich zu herkömmlichen Vorrichtungen mit einer wesentlich höheren Taktrate betrieben werden. Lediglich der Abkühlvorgang dauert in der Regel länger als bei herkömmlichen Formwerkzeugen, die ausschließlich aus gut wärmeleitendem Metall gefertigt sind. Bei gleichzeitiger Verwendung mehrerer Formwerkzeuge können diese an den Stabilisierstationen gleichzeitig gekühlt werden. Das Kühlen kann alleine durch die vorhandene Umgebungsluft erfolgen oder durch Zuführen eines gasförmigen oder flüssigen Kühlmittels aktiv gekühlt werden. An den einzelnen Stabilisierstationen kann eine unterschiedliche Kühleinrichtung vorgesehen sein.

Mit den oben erläuterten Vorrichtungen kann ein Partikelschaumstoffteil hergestellt werden, wobei der Formraum mit Schaumstoffpartikel gefüllt wird und die darin befindlichen Schaumstoffpartikel durch Anlegen elektromagnetischer Strahlung verschweißt werden. Das hierdurch entstandene Partikelschaumstoffteil wird dann entformt.

Die hierbei verwendeten Schaumstoffpartikel bestehen vorzugsweise aus einem expandierbaren, thermoplastischen Kunststoff.

Ein Verfahren zur Herstellung eines Partikelschaumstoffteils nach einem weiteren Aspekt der vorliegenden Erfindung umfasst die Schritte
- Füllen eines Formraums mit Schaumstoffpartikel,
- Verschweißen der Schaumstoffpartikel, insbesondere durch Anlegen elektromagnetischer Strahlung,
- Entformen,
wobei das Formwerkzeug zwei Formhälften aufweist und diese zum Füllen des Formwerkzeuges in einer Crackspaltstellung angeordnet werden, bei welcher die Formhälften gegenüber einer geschlossenen Stellung etwas voneinander beabstandet sind, und vor dem Verschweißen mit den darin befindlichen Schaumstoffpartikel zusammengedrückt werden. Dieses Verfahren zeichnet sich dadurch aus, dass beim Füllen des Formwerkzeuges die Formhälften gegenüber der geschlossenen Stellung bereichsweise unterschiedlich weit voneinander beabstandet sind, so dass beim Zusammendrücken die Formhälften bereichsweise unterschiedlich weit zusammengefahren werden.

Hierdurch werden die im Formraum befindlichen Schaumstoffpartikel in den unterschiedlichen Bereichen des Formwerkzeuges unterschiedlich stark komprimiert. Hierdurch können unterschiedliche Dichten im geschlossenen Zustand des Formwerkzeuges erhalten werden, oder es können aufgrund unterschiedlicher Dicken des Formraumes verursachte Dichteunterschiede ausgeglichen bzw. kompensiert werden. Werden beispielsweise etwa keilförmige Schaumstoffpartikelkörper mit dem Formwerkzeug hergestellt, dann ist das daraus entstehende Partikelschaumstoffteil in der Regel in einem vorderen Bereich wesentlich dünner als in einem rückwärtigen Bereich. Wird eine Formhälfte zum Ausbilden der Crackspaltstellung um eine Schwenkachse geschwenkt, die quer zur Längserstreckung der Form an dem dünneren Ende der Form angeordnet ist, dann kann beim Zurückschwenken in die geschlossene Stellung des Formwerkzeuges eine in etwa konstante Dichte der darin enthaltenen Schaumstoffpartikel erzielt werden. Dies gilt für alle Produkte mit im Querschnitt etwa keilförmiger Form.

Es gibt jedoch auch andere Produkte, deren Dicke auf andere Art und Weise variiert. Hier ist es zweckmäßig zumindest eine Formhälfte aus zwei oder mehreren separaten Teilen vorzusehen, die unabhängig voneinander zur Ausbildung einer Crackspaltstellung bewegt werden können. Hierdurch können die einzelnen Bereiche der unterschiedlichen Teile der Formhälfte beim Zusammendrücken unterschiedlich weit zusammengefahren werden, wodurch die darin befindlichen Schaumstoffpartikel unterschiedlich stark komprimiert werden.

Auch diese Ausführungsform kann dazu verwendet werden, dass unterschiedlich dicke Bereiche des Formraumes möglichst gleichmäßig komprimiert werden, um eine möglichst gleichmäßige Erhitzung und Qualität der Verschweißung im gesamten Partikelschaumstoffteil zu erhalten. Es kann jedoch auch zweckmäßig sein, wenn bestimmte Bereiche stärker erhitzt werden sollen, dass in diesen Bereichen eine stärkere Komprimierung stattfindet, so dass die darin befindlichen Schaumstoffpartikel aufgrund ihrer höheren Dichte elektromagnetische Strahlung stärker absorbieren. So kann man während der Produktion der Schaumstoffpartikelteile ein vorbestimmtes, nicht konstantes Temperaturprofil einstellen.

Die Erfindung wird nachfolgend beispielhaft anhand der Zeichnung näher erläutert. Die Zeichnung zeigt schematisch in:
- Figur 1: ein Ausführungsbeispiel einer Vorrichtung zur Herstellung eines Partikelschaumstoffteils,
- Figur 2a, 2b: jeweils ein Formwerkzeug in einer teilgeöffneten Stellung (Figur 2a) und einer geschlossenen Stellung (Figur 2b) in einer Schnittdarstellung,
- Figur 3: ein Formwerkzeug, das zur Herstellung von großvolumigen Partikelschaumstoffteilen, wie zum Beispiel Isolationspaneelen, geeignet ist, in einer Schnittdarstellung,
- Figur 4: einen Generator für elektromagnetische Strahlung, der einen abstimmbaren Schwingkreis bildet, und das Formwerkzeug in einem elektrischen Schaltbild,
- Figur 5: eine Regeleinrichtung zum Regeln der Leistungszufuhr in einem Schaltbild, und
- Figur 6: ein Ausführungsbeispiel einer Vorrichtung zur Herstellung eines Partikelschaumstoffteils in einer perspektivischen Ansicht.

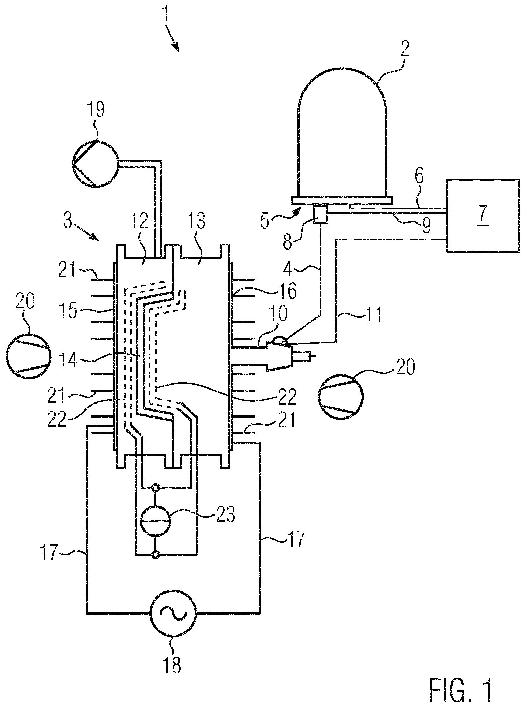

Der grundsätzliche Aufbau einer Vorrichtung 1 zur Herstellung eines Partikelschaumstoffteils ist in Figur 1 gezeigt. Diese Vorrichtung 1 umfasst einen Materialbehälter 2, ein Formwerkzeug 3 und eine Leitung 4, die vom Materialbehälter 2 zum Formwerkzeug 3 führt.

Der Materialbehälter 2 dient zur Aufnahme loser Schaumstoffpartikel. Der Materialbehälter 2 weist einen Boden 5 auf, wobei er im Bodenbereich über eine Druckluftleitung 6 mit einer Druckluftquelle 7 verbunden ist. Die Druckluftleitung 6 ist mit mehreren im Boden 5 angeordneten Düsen (nicht dargestellt) verbunden, so dass in dem Materialbehälter 2 mehrere Luftströme (= Fluidisierluft) eingeleitet werden können, die die darin befindlichen Schaumstoffpartikel verwirbeln und dadurch vereinzeln.

Im Bereich des Bodens 5 des Materialbehälters 2 ist eine Öffnung ausgebildet, an welche die Förderleitung 4 angeschlossen ist. Die Öffnung ist mittels eines Schiebers (nicht dargestellt) verschließbar.

Benachbart zum Materialbehälter befindet sich in der Förderleitung 4 eine Treibdüse 8. Die Treibdüse 8 ist mit einer weiteren Druckluftleitung 9 mit der Druckluftquelle 7 verbunden. Dieser Treibdüse 8 zugeführte Druckluft dient als Treibluft, da sie durch die Treibdüse 8 in die Förderleitung 4 eintritt und in Richtung zum Formwerkzeug 3 strömt. Hierdurch wird an der Treibdüse 8 an der zum Materialbehälter 2 weisenden Seite ein Unterdruck erzeugt, der aus dem Materialbehälter Schaumstoffpartikel ansaugt.

Die Förderleitung 4 mündet in einen Füllinjektor 10, der an das Formwerkzeug 3 gekoppelt ist. Der Füllinjektor 10 ist mit einer weiteren Druckluftleitung 11 mit der Druckluftquelle 7 verbunden. Die dem Füllinjektor 10 zugeführte Druckluft wird einerseits zum Füllen des Formwerkzeuges 3 verwendet, indem der Strom von Schaumstoffpartikeln mittels der Druckluft in Richtung zum Formwerkzeug 3 beaufschlagt wird. Andererseits kann die dem Füllinjektor 10 zugeführte Druckluft auch zum Zurückblasen der Schaumstoffpartikel aus der Förderleitung 4 in den Materialbehälter 2 verwendet werden, wenn der Füllvorgang am Formwerkzeug 3 abgeschlossen ist.

Das Formwerkzeug 3 ist aus zwei Formhälften 12, 13 ausgebildet. Zwischen den beiden Formhälften ist zumindest ein Formraum 14 begrenzt, in dem der Füllinjektor 10 zum Einbringen der Schaumstoffpartikel mündet. Das Volumen des Formraums 14 kann durch Zusammenfahren der beiden Formhälften 12, 13 verringert werden. Bei auseinander gefahrenen Formhälften 12, 13 ist ein Spalt zwischen den Formhälften 12, 13 ausgebildet, der als Crack-Spalt bezeichnet wird. Deshalb wird ein solches Formwerkzeug 3 auch als Crack-Spalt-Formwerkzeug bezeichnet.

Die Vorrichtung 1 kann keinen Dampfgenerator und keine Dampfzuführung zum Formraum 14 aufweisen, wie es bei herkömmlichen Vorrichtungen zur Herstellung von Partikelschaumstoffteilen üblich ist. In dem Formraum 14 kann Feuchte durch die im Material der Schaumstoffpartikel enthaltene Restfeuchte und durch die in der Druckluft enthaltene Feuchte gelangen. Die Vorrichtung 1 kann jedoch auch mit einem Dampfgenerator und einer Dampfzuführung zum Formraum 14 und/oder zur Förderleitung 4 ausgebildet sein, um gesättigten Trockendampf dem Formraum 14 zum Erhitzen der Schaumstoffpartikel zuzuführen und/oder um Schaumstoffpartikel auf ihrem Transport vom Materialbehälter 2 zum Formraum 14 zu benetzen. Auch können die Schaumstoffpartikel, die sich im Materialbehälter 2 befinden, mit Wasser in flüssiger Form benetzt werden, wobei hierzu im Materialbehälter 2 entsprechende Düsen angeordnet sind, die das Wasser zerstäuben.

An den Formhälften 12, 13 ist jeweils eine Kondensatorplatte 15, 16 angeordnet. Diese Kondensatorplatten bestehen jeweils aus einem gut elektrisch leitenden Material, wie z. B. Kupfer oder Aluminium. An der Formhälfte 13 ist der Füllinjektor 10 angeordnet. Der Füllinjektor 10 erstreckt sich durch eine Ausnehmung in der Kondensatorplatte 16, welche auf der Formhälfte 13 angebracht ist.

Die Kondensatorplatten 15, 16 sind über elektrische Leitungen 17 zur Übertragung von Hochfrequenzspannungen mit einem Generator 18 verbunden.

Die Formhälften 12, 13 weisen jeweils einen Grundkörper auf, der aus einem elektrisch nicht leitenden und insbesondere für elektromagnetische RF-Strahlung im Wesentlichen transparentem Material, wie z. B. Polytetrafluorethylen (PTFE), Polyethylen, insbesondere UHMWPE, Polyetherketon (PEEK) ausgebildet sein kann. Lediglich die Kondensatorplatten 15, 16 sind elektrisch leitend ausgebildet. Das "im Wesentlichen transparente Material" ist ein Material, das von elektromagnetischer Strahlung, insbesondere RF-Strahlung, durchdrungen werden kann. Jedoch kann dieses Material gezielt mit einer gewissen Absorptionseigenschaft für elektromagnetische RF-Strahlung ausgebildet sein, um einen Teil der elektrischen RF-Strahlung in Wärme umzuwandeln und um die Formhälften 12, 13 zu erhitzen. Dies wird unten noch näher erläutert.

Das Formwerkzeug kann optional mit einer Unterdruckpumpe 19 verbunden sein, so dass ein Unterdruck bzw. Vakuum an den Formraum 14 angelegt werden kann. Dieser Unterdruck führt dazu, dass im Formraum 14 enthaltene Feuchte abgezogen wird.

Die Kondensatorplatten 15, 16 sind vorzugsweise mit einer Kühleinrichtung versehen. Im vorliegenden Ausführungsbeispiel ist die Kühleinrichtung durch Ventilatoren 20 ausgebildet, welche Kühlluft auf die vom Formraum 14 abgewandte Seite der Kondensatorplatten 15, 16 lenken. Zur Steigerung der Kühlwirkung können an den Kondensatorplatten 15, 16 Kühlrippen 21 vorgesehen sein.

Alternativ oder zusätzlich können auch Kühlleitungen an den Kondensatorplatten 15, 16 angeordnet sein, durch welche ein Kühlmedium geführt wird. Als Kühlmedium wird vorzugsweise eine Flüssigkeit verwendet, wie z. B. Wasser oder Öl.

Im Folgenden wird ein Verfahren zum Herstellen von Partikelschaumstoffteilen mit der oben beschriebenen Vorrichtung erläutert:
Das Verfahren umfasst folgende grundsätzliche Schritte:
- Füllen des Formraums 14
- Verschweißen der Schaumstoffpartikel
- Stabilisieren (optional)
- Entformen
- Reinigen des Werkzeuges (optional)

Zum Befüllen des Formraums 14 wird über die Druckluftleitung 6 im Bereich des Bodens 5 des Materialbehälters Luft eingeblasen, um die darin befindlichen Schaumstoffpartikel zu verwirbeln und zu vereinzeln. Gleichzeitig wird der Treibdüse auch Treibluft zugeführt, so dass aus dem Materialbehälter 2 Schaumstoffpartikel in die Förderleitung 4 gesaugt und mit der Treibluft in Richtung zum Formwerkzeug 3 transportiert werden. Der Formraum 14 ist geschlossen, wobei die Formhälften 12, 13 vollständig zusammengefahren oder mit einem Crack-Spalt voneinander beabstandet sein können.

Der Schieber des Materialbehälters 2 kann aufeinanderfolgend geöffnet und geschlossen werden. Die Öffnungs- und Verschlusszeiten liegen typischerweise im Bereich von 500 ms bis 1 s. Durch dieses zyklische Öffnen und Schließen des Schiebers werden die Schaumstoffpartikel aus dem Materialbehälter 2 intermittierend der Förderleitung 4 zugeführt. Hierdurch kann eine Brückenbildung der Schaumstoffpartikel im Materialbehälter 2 aufgebrochen werden und die Schaumstoffpartikel werden vereinzelt. Dies ist insbesondere zweckmäßig bei Schaumstoffpartikeln mit einer adhäsiven Oberfläche, wie z. B. eTPU-Schaumstoffpartikel.

Ein intermittierendes Ansaugen kann auch alternativ durch ein intermittierendes Zuführen der Treibluft aus der Druckluftleitung 9 an der unmittelbar benachbart zum Materialbehälter 2 angeordneten Treibdüse 8 erfolgen.

Das Formwerkzeug 12, 13 ist mit zumindest einem Ventil (nicht dargestellt) versehen, das beim Zuführen von Schaumstoffpartikel geöffnet ist, damit die in dem Formraum 14 einströmenden Druckluft entweichen kann. Dieses Ventil kann beim Befüllen des Formraumes 14 derart eingestellt werden, dass sich im Formraum 14 ein Gegendruck bildet. Hierdurch kann der Druck in der Förderleitung und im Formraum 14 hochgehalten werden, wodurch die Schaumstoffpartikel auf einem kleinen Volumen gehalten werden. Dies erlaubt es, dass dem Formraum 14 mehr Schaumstoffpartikel zugeführt werden, als dies ohne Anlegen des Gegendrucks möglich wäre. Nach dem Zurücknehmen des Gegendruckes expandieren die Schaumstoffpartikel im Formraum 14.

Ein weiterer Parameter zur Einstellung der Füllmenge ist der Crack-Spalt, d. h., der Spalt, mit welchem die beiden Formhälften 12, 13 während des Füllens voneinander beabstandet angeordnet sind. Die Verwendung eines Crack-Spaltes beim Füllen erhöht vor allem die Dichte in einem dünnen Bereich des herzustellenden Partikelschaumstoffteils.

Sobald festgestellt wird, dass der Formraum 14 mit Schaumstoffpartikel gefüllt ist, wird der Füllinjektor 10 geschlossen. Die in der Leitung befindlichen Schaumstoffpartikel werden mit der an den Füllinjektor 10 zugeführten Druckluft in den Materialbehälter 2 zurückgeblasen.

Das Füllen des Formraums 14 mit Schaumstoffpartikel ist in der deutschen Patentanmeldung DE 10 2014 117 332 ausführlich beschrieben, weshalb diesbezüglich auf diese Patentanmeldung Bezug genommen wird.

Nach dem Befüllen des Formraums 14 mit Schaumstoffpartikeln werden diese durch Anlegen elektromagnetischer RF-Strahlung erhitzt. Diese RF-Strahlung wird erzeugt, indem an den Kondensatorplatten 15, 16 eine Hochfrequenzspannung von etwa 10⁴ V mit einer Frequenz von 27,12 MHz angelegt wird.

Die Schaumstoffpartikel können auf Basis von Polyurethan (eTPU) ausgebildet sein. Polyurethan weist einen dielektrischen Verlustfaktor D von 0,2 bei einer elektromagnetischen Strahlung mit einer Frequenz von 1 MHz auf. Der dielektrische Verlustfaktor von Polypropylen (PP) bei einer elektromagnetischen Strahlung mit einer Frequenz von 1 MHz beträgt hingegen lediglich nur 0,00035. Die Absorptionsfähigkeit von Polyurethan ist daher wesentlich höher als die von Polypropylen. Hierdurch ist es möglich, ohne zusätzliche Wärme übertragende Stoffe, insbesondere ohne wässrigen Lösungen, die zum Verschweißen der Schaumstoffpartikel notwendige Wärme in den Formraum 14 einzubringen, da die Schaumstoffpartikel selbst die elektromagnetischen Wellen absorbieren.

Anstelle von Schaumstoffpartikel auf Basis von Polyurethan können auch Schaumstoffpartikel aus expandierbaren Thermoplasten auf Basis von Polyether-Block-Amid (ePEBA), auf Basis von Polylactat (PLA), auf Basis von Polyamid (ePA), auf Basis von Polybutylenterephthalat (ePBT), auf der Basis von Polyester-Ether-Elastomer (eTPEE) oder auf Basis von Polyethylenterephtalat (ePET) verwendet werden.

Diese Materialien weisen jeweils funktionelle Gruppen (Amidgruppe, Urethangruppe bzw. Estergruppe) auf, welche ein Dipolmoment bewirken. Diese funktionellen Gruppen sind dafür verantwortlich, dass die Moleküle RF-Strahlung absorbieren. Daher sind auch andere thermoplastische Kunststoffe, welche derartige ein Dipolmoment verursachende funktionelle Gruppen aufweisen, geeignet mit RF-Strahlung verschweißt zu werden.

Es können auch Schaumstoffpartikel auf Basis von ePP (expandierbares Polypropylen) oder ePS (expandierbares Polystyrol) zu Partikelschaumstoffteilen verschweißt werden. Da diese Materialien elektromagnetische Strahlung nur in einem sehr geringen Maße absorbieren, ist es notwendig, ein dielektrisches Wärmeübertragungsmedium hinzuzugeben, wie z.B. Wasser. Die Schaumstoffpartikel können im Materialbehälter 2 oder während ihres Transports vom Materialbehälter 2 zum Formwerkzeug 3 mit dem Wärmeübertragungsmedium benetzt werden. Eine Benetzung in der Leitung 4 hat den Vorteil, dass die Schaumstoffpartikel sehr gleichmäßig benetzt werden und das Wärmeübertragungsmedium gleichmäßig im Formraum 14 verteilt ist. Dies führt zu einer entsprechend gleichmäßigen Erhitzung der Schaumstoffpartikel im Formraum 14.

Das Formwerkzeug 3 kann auch mit einer Dampfquelle (nicht dargestellt) verbunden sein, mit welcher gesättigter Trockendampf dem Formraum 14 zugeführt werden kann. Dies ist zweckmäßig, wenn Materialien verschweißt werden, bei welchen der dielektrische Verlustfaktor temperaturabhängig ist. Solche Materialien sind z. B. ePES (expandierbares Polyethersulphon) oder expandierbares Polyamid. Bei geringen Temperaturen ist die Absorptionseigenschaft von elektromagnetischen Wellen gering. Daher werden diese Schaumstoffpartikel zunächst mittels des Dampfes erhitzt, um dann ab einer bestimmten Temperatur alleine oder zusätzlich mittels elektromagnetischer Strahlung auf noch höhere Temperaturen erhitzt zu werden. Alternativ können die Schaumstoffpartikel mit einem dielektrischen Wärmeübertragungsmedium benetzt werden, sodass das elektrische Wärmeübertragungsmedium mittels elektromagnetischer Strahlung erhitzt wird, um die Schaumstoffpartikel auf eine vorbestimmte Temperatur zu erwärmen. Danach kann eine direkte Erhitzung der Schaumstoffpartikel aufgrund der elektromagnetischen Strahlung erfolgen, da mit zunehmender Temperatur die Absorptionseigenschaften von elektromagnetischer Strahlung zunehmen.

Die Dauer, über welche die elektromagnetische RF-Strahlung angelegt wird, hängt vom Volumen des Formraums 14, von der Dichte der Schaumstoffpartikel sowie von der angelegten elektrischen Leistung bzw. der angelegten elektrischen Spannung ab. In Versuchen hat sich gezeigt, dass in Abhängigkeit vom Volumen und vom Material, aus dem die Schaumstoffpartikel ausgebildet sind etwa 30 s bis etwa 2 min benötigt werden, um die Schaumstoffpartikel zuverlässig und vollständig zu verschweißen. Hierbei wurde eine elektrische Spannung von 5 kV bis 20 kV angelegt.

Vorzugsweise wird während des Verschweißens die Temperatur der Schaumstoffpartikel gemessen und die elektrische Leistung entsprechende geregelt. Die elektrische Leistung wird vorzugsweise derart geregelt, dass die Schaumstoffpartikel eine Temperatur geringfügig über ihrer Erweichungstemperatur innehaben. Anstelle der Temperatur der Schaumstoffpartikel kann auch eine andere physikalische Größe gemessen werden, die mit der in den Formraum eingebrachten elektrischen Leistung in Bezug steht. Dies kann z.B. die an den Kondensatorplatten 15, 16 anliegende elektrische Spannung sein.

Die dem Formraum 14 begrenzende Oberfläche kann zusätzlich temperiert werden. Hierzu können im Formwerkzeug Heizdrähte 34 angrenzend an die dem Formraum 14 begrenzende Oberfläche angeordnet sein. Die Heizdrähte 34 sind mit einer Stromquelle 35 verbunden, mit welcher ein Heizstrom in die Heizdrähte eingespeist werden kann.

Anstelle von Heizdrähten können auch Fluidkanäle in den Formhälften 12, 13 vorgesehen sein, durch welche ein entsprechendes temperiertes Fluid strömt. Vorzugsweise ist das Fluid Wasser bzw. Dampf.

Nach dem Anlegen der elektromagnetischen RF-Strahlung wird der Formraum 14 für eine vorbestimmte Zeitdauer geschlossen gehalten, wodurch sich die eingebrachte Wärme gleichmäßig im Partikelschaumstoffteil verteilt und eine sehr gleichmäßige Verschweißung zwischen allen Schaumstoffpartikeln ausbildet. Dieser Prozessschritt wird als Stabilisieren bezeichnet. Beim Stabilisieren findet auch eine geringfügige Abkühlung des Partikelschaumstoffteils statt. Da die Formhälften 12, 13 aus einem für elektromagnetische RF-Strahlung im Wesentlichen transparenten Material ausgebildet sind, das üblicherweise ein Kunststoffmaterial ist, das schlecht Wärme leitet, wird grundsätzlich beim geschlossenen Formraum 14 wenig Wärme nach außen abgegeben.

Aus Kunststoff ausgebildete Formhälften 12, 13 haben gegenüber aus Metall ausgebildeten Formhälften den Vorteil, dass sie einerseits wesentlich besser thermisch isolieren und andererseits eine geringere Wärmekapazität aufweisen. Hierdurch können die gewünschten Temperaturzyklen wesentlich schneller und mit weniger Energie durchgeführt werden, wobei die zugeführte Wärme fast vollständig den Schaumstoffpartikeln zugeführt wird.

Während der Dauer des Stabilisierens oder einem Teil der Dauer des Stabilisierens können die Kondensatorplatten 15, 16 durch die Kühleinrichtung 32, 33 aktiv gekühlt werden, wodurch den Grundkörpern der Formhälften 12, 13 und damit auch dem Partikelschaumstoffteil Wärme entzogen wird.

Nach dem Stabilisieren wird das Partikelschaumstoffteil entformt, indem die beiden Formhälften 12, 13 auseinander bewegt werden. Am Formwerkzeug können zum Entformen Entformstößel vorgesehen sein, mit welchen das Partikelschaumstoffteil aus einer der beiden Formhälften 12, 13 gestoßen wird.

Das Stabilisieren ist ein optionaler Verfahrensschritt. Bei bestimmten Materialien und Formen kann er auch weg gelassen werden. Je größer das Volumen des herzustellenden Partikelschaumstoffteils ist, desto zweckmäßiger ist es, nach dem Verschweißen das Partikelschaumstoffteil im Formwerkzeug zu stabilisieren.

Zur Erhöhung des Durchsatzes kann bereits während des Füllens und/oder während des Schließens eines Crack-Spaltes die elektromagnetische RF-Strahlung angelegt werden.

Die elektromagnetische Strahlung, insbesondere die RF-Strahlung, kann bereits während dem Füllen oder auch erst nach dem Füllen des Formraums 14 mit Schaumstoffpartikeln zunächst mit geringer elektrischer Leistung bzw. geringer elektrischer Spannung angelegt werden, um das Material auf eine bestimmte Temperatur vorzuwärmen, um dann die elektrische Leistung bzw. elektrische Spannung allmählich oder schlagartig zu steigern.

Es kann auch sinnvoll sein, die Leistung bzw. die Spannung der elektromagnetischen RF-Strahlung allmählich zu erhöhen, so dass eine Rampe über eine Zeitdauer von beispielsweise 30 Sekunden bis 3 Minuten durch das allmähliche Ansteigen der elektrischen Leistung bzw. Spannung der elektromagnetischen RF-Strahlung ausgeführt wird. Hierdurch wird ein sehr gleichmäßiges Erhitzen der Schaumstoffpartikel erzielt.

Optional kann auch ein Unterdruck und/oder Vakuum an den Formraum 14 angelegt werden. Dies ist zweckmäßig, wenn die Schaumstoffpartikel und/oder die zugeführte Druckluft eine gewisse Feuchte aufweisen.

Das oben erläuterte Verfahren ist im Vergleich zum alleinigen Verschweißen mit Dampf ein trockenes Verfahren. Hierdurch sind die hergestellten Partikelschaumstoffteile nach dem Produktionsvorgang trocken bzw. trockener und können schneller weiteren Verarbeitungsschritten zugeführt werden. Es kann auch zweckmäßig sein, die warmen Partikelschaumstoffteile zu entformen und einer weiteren Bearbeitung unmittelbar zu zuführen. Hierdurch können in der Produktion wesentliche Effizienzsteigerungen erzielt werden, da einerseits die Pausen zwischen einzelnen Prozessschritten verkürzt werden können, andererseits die zum Verschweißen der Schaumstoffpartikel eingebrachte Wärme auch für nachfolgende Verfahrensschritte zumindest zum Teil genutzt werden kann.

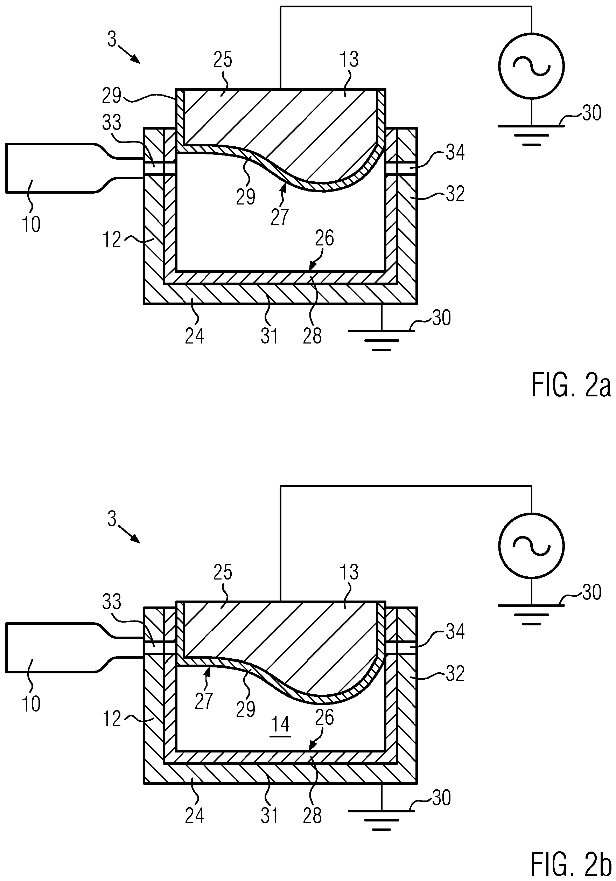

Nachfolgend wird ein Formwerkzeug 3 (Figur 2a, Figur 2b) erläutert, das jeweils eine erste Formhälfte 12 und eine zweite Formhälfte 13 aufweist und in der oben beschriebenen Vorrichtung 1 verwendet werden kann. Bewegungseinrichtungen, Halteelemente, Thermometer zum Messen der Temperatur im Formraum und weitere mechanische Teile zum Öffnen und Schließen des Werkzeuges sind zu einfacheren zeichnerischen Darstellung in Figur 2a, 2b weggelassen.

Das Formwerkzeug 3 ist aus zwei Formhälften 12, 13 ausgebildet, die jeweils einen Grundkörper 24, 25 aus einem elektrisch leitenden Material aufweisen. Diese Grundkörper bestehen beispielsweise aus Aluminium, Kupfer oder einer elektrisch gut leitenden Legierung.

Die beiden Formhälften 12, 13 begrenzen einen Formraum 14 mittels einer inneren Begrenzungsfläche 26, 27. Die inneren Begrenzungsflächen 26, 27 der beiden Formhälften 12, 13 sind mit einer elektrisch isolierenden Beschichtung 28, 29 versehen.

Die elektrisch isolierenden Beschichtungen können aus einem für elektromagnetische Strahlung, insbesondere RF-Strahlung, im Wesentlichen transparenten Material, wie zum Beispiel PTFE, PE, PEEK ausgebildet sein. Sie können jedoch auch aus einem Kunststoffmaterial ausgebildet sein, das einen bei der angelegten elektromagnetischen Strahlung einen ähnlichen, dielektrischen Verlustfaktor aufweist, wie das im Formraum 14 zu verarbeitende Kunststoffmaterial, um so über den gesamten Formraum 14 hinweg und am Randbereich des Formraumes eine gleichmäßige Erhitzung beim Anlegen der elektromagnetischen Strahlung zu erzielen. Hierzu ist die Beschichtung 28, 29 vorzugsweise aus einem Material mit einem moderaten Verlustfaktor ausgebildet, wie zum Beispiel PET (Polyethylenterephthalat), PEEK (Polyetherketon), POM (Polyoxymethylen), Polyimid und PMMA (Polymethylmethacrylat). Diese Beschichtungen 28, 29 sind somit im Wesentlichen transparent für RF-Strahlung, da sie nur einen geringen Anteil der elektromagnetischen Strahlung absorbieren und können aufgrund des relativ geringen Verlustfaktors mit einer gewissen Dicke von beispielsweise zumindest 2 mm, insbesondere zumindest 2,5 mm oder zumindest 5 mm ausgebildet sein. Die Beschichtung ist vorzugsweise nicht dicker als 20 mm, insbesondere nicht dicker als 15 mm und vorzugsweise nicht dicker als 10 mm, damit der Anteil der von der Beschichtung absorbierten Energie der elektromagnetischen Wellen klein ist.

Die elektrisch leitenden Grundkörper 24, 25 bilden die Kondensatorplatten des Formwerkzeuges 3. Sie weisen deshalb einen elektrischen Anschluss auf, um mit dem Generator 18 oder mit Masse 30 verbunden werden zu können. Der Generator 18 stellt eine Strahlungsquelle zum Erzeugen elektromagnetischer Strahlung dar. Vorzugsweise ist der Generator zum Erzeugen von RF-Strahlung ausgebildet. Der Generator kann auch zum Erzeugen von Mikrowellenstrahlung ausgebildet sein, wobei bei größeren Formräumen 14 mit einer RF-Strahlung eine wesentlich gleichmäßigere Erhitzung als mit Mikrowellenstrahlung möglich ist. Zudem können die meisten Kunststoffmaterialien RF-Strahlung wesentlich besser als Mikrowellenstrahlung absorbieren. Daher ist die Verwendung von RF-Strahlung bevorzugt.

Dadurch, dass die Formhälften 12, 13 sowohl den Formraum 14 begrenzen als auch gleichzeitig die Kondensatorplatten bilden, ist der Abstand zwischen den "Kondensatorplatten" und dem Formraum 14 sehr klein und wird alleine durch die elektrisch isolierenden Beschichtungen 28, 29 bestimmt. Hierdurch sind die Verluste an elektromagnetischer Strahlung sehr gering, wodurch der Anteil der Leistung, die als Wärme in die zu verschweißenden Schaumstoffpartikel eingebracht wird, sehr hoch ist. Ein solches Werkzeug erlaubt somit eine sehr effiziente Verschweißung der Schaumstoffpartikel zu einem Partikelschaumstoffteil.

Bei dem vorliegenden Ausführungsbeispiel des Formwerkzeuges 3 weist die erste Formhälften 12 eine Bodenwandung 31 und eine umlaufende Seitenwandung 32 auf. Im vorliegenden Ausführungsbeispiel sind sowohl die Bodenwandung 31 als auch die Seitenwandung 32 aus dem elektrisch leitenden Grundkörper 24 und der innen angeordneten Beschichtung 28 ausgebildet. Es ist auch möglich, dass die Seitenwandung 32 alleine aus einem nicht elektrisch leitenden Material, insbesondere Kunststoffmaterial, ausgebildet ist oder nur teilweise mittels des elektrisch leitenden Grundkörpers 24 ausgebildet ist. Die zweite Formhälfte 13 bildet einen Stempel, der in den durch die erste Formhälfte 12 gebildeten Hohlraum einfahren kann und so den Formraum 14 dicht abschließt. Der dichte Abschluss zwischen den beiden Formhälften 12, 13 ist zumindest so dicht, dass darin befindliche Schaumstoffpartikel nicht entweichen können. Der Formraum 14 ist nicht notwendigerweise gasdicht abgeschlossen.

Die beiden Formhälften 12, 13 können relativ zueinander mittels einer Presse (nicht dargestellt) bewegt werden, und mit einer vorbestimmten Kraft beaufschlagt werden.

An der ersten Formhälfte 12 ist eine Durchgangsöffnung zum Zuführen von Schaumstoffpartikel angeordnet, welche im Folgenden als Einfüllöffnung 33 bezeichnet wird. An die Einfüllöffnung 33 ist der Füllinjektor 10 angeschlossen. Dieser Füllinjektor 10 unterscheidet sich von herkömmlichen Füllinjektoren, da er keinen Schließmechanismus zum Schließen der Einfüllöffnung 33 aufweist, wie es unten näher erläutert wird.

Die erste Formhälfte 12 weist eine oder mehrere Durchgangsöffnungen zum Entweichen von Luft auf, welche im Folgenden als Entlüftungsöffnung 34 bezeichnet werden.

Die Einfüllöffnung 33 und die Entlüftungsöffnungen 34 sind an einem Abschnitt bzw. Bereich, insbesondere einem Randbereich, der ersten Formhälfte 12 angeordnet, der im geschlossenen Zustand des Formwerkzeuges 3 (Figur 2b) von der zweiten Formhälfte 13 verdeckt bzw. abgedeckt wird. Hierdurch werden die Einfüllöffnung 33 und die Entlüftungsöffnung 34 automatisch beim Schließen des Formwerkzeuges 3 durch Einführen des zweiten Formwerkzeuges 13 in den durch das erste Formwerkzeug 12 ausgebildeten Hohlraum geschlossen. Hierdurch ist es nicht notwendig, dass der Füllinjektor 10 einen Schließmechanismus aufweist, mit dem die Einfüllöffnung 33 geschlossen wird.

Dieser Abschnitt bzw. Bereich ist der Bereich der ersten Formhälfte 12, der nicht von der zweiten Formhälfte 13 abgedeckt ist, ist der Bereich um den die Formhälften beim Auseinanderbewegen in die Crackspaltstellung geöffnet werden.

Vorzugsweise ist die erste Formhälfte 12 mit Masse 30 verbunden. Der Füllinjektor 10 ist an den elektrisch leitenden Grundkörper 24 der ersten Formhälfte 12 gekoppelt, so dass auch der Füllinjektor 10 elektrisch mit der Masse 30 verbunden ist. Der Generator 18 erzeugt elektromagnetische Wellen bzw. eine elektrische Wechselspannung gegenüber der Masse 30, welche am Grundkörper 25 der zweiten Formhälfte 13 anliegt. Hierdurch wird ein elektromagnetisches Wechselfeld, insbesondere RF-Strahlung, im Formraum 14 ausgebildet.

Bei einer solchen Ausbildungsform des Formwerkzeuges 3 ist wichtig, dass die elektrisch leitenden Grundkörper 24, 25 der beiden Formhälften 12, 13 voneinander elektrisch isoliert sind. Im vorliegenden Ausführungsbeispiel wird dies mittels der Beschichtungen 28, 29 erzielt.

Die innere Begrenzungsfläche 26, 27 einer der beiden Formhälften 12, 13 konturiert ausgebildet. Konturiert bedeutet im Sinne der vorliegenden Erfindung eine jede Form, welche von einer ebenflächigen Begrenzungsfläche abweicht. Im vorliegenden Ausführungsbeispiel ist die innere Begrenzungsfläche 27 der zweiten Formhälfte 13 konturiert. Die innere Begrenzungsfläche 26 der ersten Formhälfte 12 ist im Bereich der Bodenwandung 31 nicht konturiert.

Ein solches Formwerkzeug 3 unterscheidet sich weiterhin von bekannten Formwerkzeugen zum Verschweißen von Schaumstoffpartikeln mittels elektromagnetischer Wellen dadurch, dass das zweite Formwerkzeug 13 stempelartig ausgebildet ist und mit seinem elektrischen Grundkörper 25 sich zumindest teilweise innerhalb des durch die erste Formhälfte 12 begrenzten Hohlraumes befindet und somit der elektrisch leitende Grundkörper 25, der als Kondensatorplatte fungiert, sich sehr nahe am Formraum 14 bzw. an den zu verschweißenden Schaumstoffpartikeln befindet.

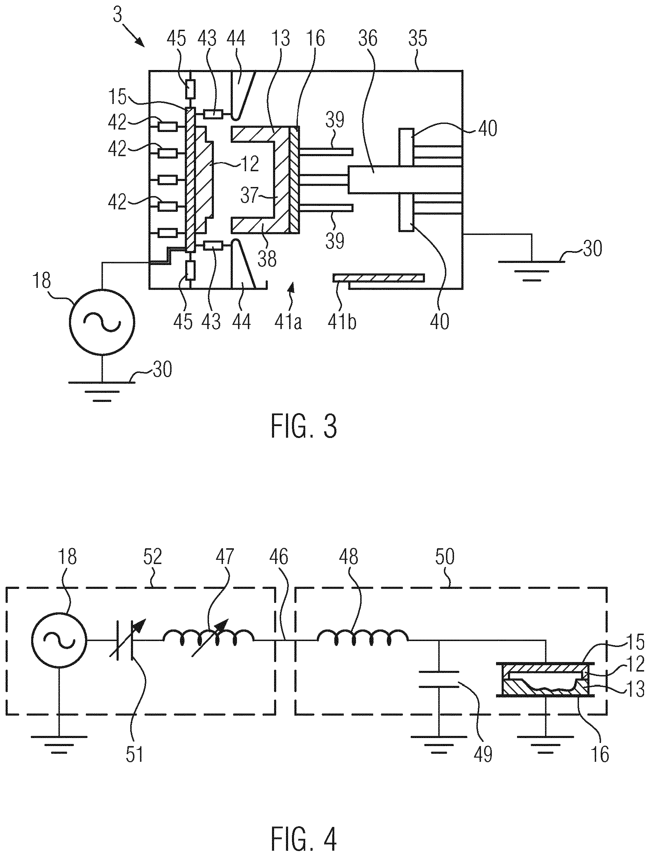

Eine weitere Ausführungsform des Formwerkzeuges 3 ist in Figur 3 schematisch dargestellt. Dieses Formwerkzeug 3 weist zwei im Wesentlichen ebenflächige Kondensatorplatten 15, 16 auf. An beiden Kondensatorplatten 15, 16 ist jeweils eine der Formhälften 12, 13 befestigt. Die Formhälften sind wie bei der in Figur 1 gezeigten Ausführungsform aus einem nicht elektrisch leitenden Material ausgebildet. Bezüglich der Ausgestaltung der Formhälften 12, 13 und der Materialien, aus welchen die Formhälften ausgebildet sind, wird zur Vermeidung von Wiederholungen auf die Erläuterungen zu der in Figur 1 gezeigten Formhälften verwiesen.

Dieses Formwerkzeug 3 besitzt ein Gehäuse 35, das aus einem elektrisch leitenden Material ausgebildet ist. Das Gehäuse ist vorzugsweise ein Metallgehäuse.

Im Gehäuse sind die erste Kondensatorplatte 15 und die erste Formhälfte 12 ortsfest angeordnet. Die zweite Kondensatorplatte 16 und die zweite Formhälfte 13 sind an einer Bewegungseinrichtung gekoppelt, die im vorliegenden Ausführungsbeispiel eine hydraulische Kolben-/Zylindereinheit 36 ist. Die Bewegungseinheit kann auch eine pneumatische Kolben-/Zylindereinheit oder ein anderes Stellglied sein, welches die notwendige Kraft zum Zusammenhalten der beiden Formhälften 12, 13 aufbringen kann, sein. Die erste Formhälfte 12 ist im Wesentlichen plattenförmig ausgebildet und die zweite Formhälfte 13 weist eine Bodenwandung 37 und eine umlaufende Seitenwandung 38 auf, so dass sie einen einseitig offenen Formhohlraum begrenzt. Die zweite Formhälfte 13 ist mit Stößel 39 versehen, welche zum Entformen des Formhohlraumes in diesen hineingefahren werden können. Das Entformen erfolgt, indem beim Zurückziehen der zweiten Formhälfte 13 mittels der Kolben-/Zylindereinheit 36 die Stößel 39 auf Anschlagplatten 40 stoßen und so in den durch die zweite Formhälfte 13 begrenzten Formhohlraum eindringen. Das Gehäuse 35 weist bodenseitig eine Öffnung 41a auf, welche mit einer horizontal verfahrbaren Tür 41b verschließbar ist. Beim Zurückziehen der zweiten Formhälfte 13 wird die Tür 41b geöffnet, so dass das jeweils entformte Partikelschaumstoffteil durch die offene Öffnung 41a aus dem Formwerkzeug 3 fällt und mittels geeigneter Fördermittel (nicht dargestellt) abtransportiert werden kann.

Die zweite, bewegliche Kondensatorplatte 16 ist über die Bewegungseinrichtung und über das Gehäuse 35 mit der Masse 30 elektrisch verbunden.

Die erste Kondensatorplatte 15 ist elektrisch mit dem Generator 18 mittels geeigneter Wellen- bzw. Koaxialleiter verbunden.

Die erste Kondensatorplatte 15 ist ortsfest mittels mehrerer mechanischer Verbindungen mit einer Rückwand des Gehäuses 35 verbunden. Eine jede mechanische Verbindung weist einen Isolationskörper 42 auf. Die mechanischen Verbindungen bzw. die Isolationskörper 42 erstrecken sich in etwa parallel zur Bewegungsrichtung der zweiten Formhälfte 13. Im vorliegenden Ausführungsbeispiel ist der Isolationskörper aus Keramik ausgebildet. Es können jedoch auch andere gut elektrisch isolierende Materialien, wie zum Beispiel Glas, als Material für die Isolationskörper vorgesehen sein. Die Isolationskörper 42 können Druckbelastungen aufnehmen. Sie sind jedoch empfindlich gegenüber seitlichen Kräften und Zugbelastungen. An der Rückseite der ersten Kondensatorplatte 16, welche die von der Formhälfte 12 abgewandte Seite ist, befinden sich eine Vielzahl von mechanischen Verbindungen mit jeweils einem der Isolationskörper 42 zwischen der Kondensatorplatte 15 und der Rückwandung des Gehäuses 35. Diese mechanischen Verbindungen sind vorzugsweise in einem regelmäßigen Raster angeordnet, so dass sie eine hohe Druckkraft, verteilt auf die einzelnen mechanischen Verbindungen bzw. auf die einzelnen Isolationskörper 42 aufnehmen können und an das Gehäuse 35 übertragen können.

Weiterhin sind an der Vorderseite der Kondensatorplatte 15, d.h., an der Seite, an welcher sich die Formhälfte 12 befindet, am Randbereich einige mechanische Verbindungen mit weiteren Isolationskörpern 43 angeordnet. Die Isolationskörper 43 sind genauso wie die Isolationskörper 42 ausgebildet. Diese mechanischen Verbindungen erstrecken sich zwischen dem Randbereich der Kondensatorplatte 15 und von Wandungen des Gehäuses 35 nach innen vorstehenden Halterungen 44, so dass sich auch diese mechanischen Verbindungen bzw. Isolationskörper 43 in etwa parallel zur Bewegungsrichtung der zweiten Formhälfte 13 erstrecken. Hierdurch können die beim Öffnen des Formwerkzeuges auf die erste Formhälfte 12 bzw. auf die erste Kondensatorplatte 15 wirkenden Kräfte auf das Gehäuse 35 übertragen werden.

Weiterhin können zusätzliche mechanische Verbindungen vorgesehen sein, welche quer zur Bewegungsrichtung der zweiten Formhälfte 13 bzw. der zweiten Kondensatorplatte 16 ausgebildet sind, welche wiederum Isolationskörper 45 aufweisen, um bei Wartung oder Montage an der ersten Kondensatorplatte 15 anliegende Kräfte, welche nicht parallel zur Bewegungsrichtung der zweiten Kondensatorplatte 16 bzw. der zweiten Formhälfte 13 ausgerichtet sind, an das Gehäuse 35 übertragen zu können.

Dadurch, dass alle mechanischen Verbindungen zwischen der ersten Kondensatorplatte 15 und dem Gehäuse 35 einen Isolationskörper 42, 43, 45 aufweisen, ist die erste Kondensatorplatte 15 vollständig gegenüber dem Gehäuse 35 elektrisch isoliert. Die Isolationskörper 42, 43, 45 weisen vorzugsweise eine Länge von zumindest 5 cm, insbesondere zumindest 8 cm und besonders bevorzugt zumindest 10 cm auf, so dass ein entsprechend großer Abstand zwischen dem Gehäuse 35 und der ersten Kondensatorplatte 15 hergestellt ist, um Spannungsüberschläge zwischen der Kondensatorplatte 15 und dem Gehäuse 35 zu vermeiden.

An einer derart angeordneten Kondensatorplatte können elektrische Spannungen von 1 kV bis zu einigen kV bzw. bis zu 10 kV oder einigen 10 kV angelegt werden. Ein derart ausgebildetes Formwerkzeug 3 ist geeignet, um auf die im Formraum befindlichen Schaumstoffpartikel eine Leistung im Bereich von 10 kW bis 60 kW zu übertragen. Hierdurch können großvolumige Partikelschaumstoffteile mit sehr kurzen Taktzeiten von 30 Sekunden bis 2 Minuten zuverlässig hergestellt werden.

Figur 4 zeigt schematisch in einem elektrischen Schaltbild den Generator 18, den durch die Kondensatorplatten 15, 16 ausgebildeten Werkzeugkondensator, der die Formhälften 12, 13 umschließt und eine zum Übertragen der elektromagnetischen Wellen geeignete Leitung (Hohlwellenleiter bzw. Koaxialleitung) 46, mit welcher die elektromagnetischen Wellen vom Generator 18 zum Werkzeugkondensator 15, 16 übertragen werden. Vorzugsweise ist der die Leitung 46 bildende Hohlwellenleiter als eine koaxiale Luftlinie mit einem elektrisch leitenden Innenrohr und einem elektrisch leitenden Außenrohr ausgebildet. Die koaxiale Luftlinie ist so bemessen, dass Hochspannungssignale zuverlässig übertragen werden können. Der Wellenwiderstand ist vorzugsweise auf etwa 50 Ω eingestellt.

In dieser Leitung 46 sind symbolisch eine generatorseitige Induktivität 47 und eine werkzeugseitige Induktivität 48 eingezeichnet. Diese Induktivitäten werden durch die Leitung selbst bewirkt, wobei die Länge der jeweiligen Leitungsabschnitte den Betrag der jeweiligen Induktivität bestimmt. Ein werkzeugseitiger Kondensator 49 ist parallel zum Werkzeugkondensator 15, 16 geschaltet. Dieser Kondensator 49 stellt die elektrische Kapazität zwischen der Kondensatorplatte 15 und dem Gehäuse 35 des Formwerkzeuges 3 dar. Der Werkzeugkondensator 15, 16, der Kondensator 49 und die werkzeugseitige Induktivität 48 bilden einen Werkzeugschwingkreis 50.

Ein generatorseitiger Kondensator 51 ist mit dem Generator 18 und der generatorseitigen Induktivität in Reihe geschaltet. Der generatorseitige Kondensator 51 und die generatorseitige Induktivität 47 bilden einen Generatorschwingkreis 52. Zumindest der generatorseitige Kondensator 51 oder die generatorseitige Induktivität 47 ist variabel ausgebildet, beispielsweise, indem ein Kondensator mit im Abstand veränderlichen Kondensatorplatten oder indem unterschiedlich lange Leitungsabschnitte vorgesehen sind. Es ist auch möglich, dass sowohl der generatorseitige Kondensator 51 als auch die generatorseitige Induktivität 47 variabel ausgebildet sind. Der generatorseitige Kondensator 51 kann mit einem Stellmotor versehen sein, bei dessen Betätigung der Abstand zwischen den beiden Kondensatorplatten verändert wird, indem bspw. eine der beiden Kondensatorplatten geradlinig bewegt wird, wobei beide Kondensatorplatten immer zueinander parallel sind, oder eine der beiden Kondensatorplatten geschwenkt wird.

Durch Verändern der Kapazität des Kondensators 51 bzw. der Induktivität 47 kann die Resonanzfrequenz des Generatorschwingkreises 52 verändert bzw. abgestimmt werden. Stimmen die Resonanzfrequenzen des Generatorschwingkreises und des Werkzeugschwingkreises überein, dann wird die maximale elektrische Leistung vom Generator 18 auf den Werkzeugschwingkreis 50 und damit auf den Werkzeugkondensator 15, 16 übertragen. Durch Verändern der Resonanzfrequenz des Generatorschwingkreises 52 kann die Übertragung der elektrischen Leistung gezielt gesteuert werden, wobei je stärker sich die Resonanzfrequenzen der beiden Schwingkreise 50, 52 unterscheiden, desto geringer ist die übertragene Leistung. Das Abstimmen des Generatorschwingkreises 52 kann somit gezielt zur Einstellung der in den Formraum 14 eingebrachten elektrischen Leistung verwendet werden.

Beim vorliegenden Ausführungsbeispiel wird die Resonanzfrequenz des Generatorschwingkreises 52 verändert. Es ist gleichermaßen möglich, die Resonanzfrequenz des Werkzeugschwingkreises 50 zu verändern. Dies hat bezüglich der Übertragung der elektrischen Leistung die gleiche Wirkung. Jedoch ist es schwieriger werkzeugseitig als generatorseitig einen variablen Kondensator bzw. eine variable Induktivität vorzusehen.

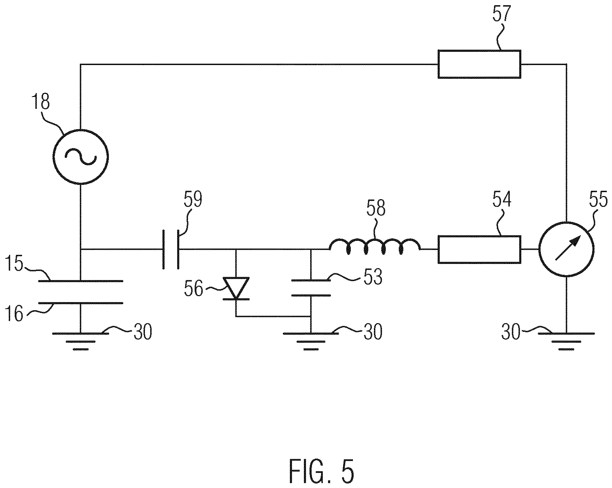

Figur 5 zeigt eine Einrichtung zum Regeln der dem Werkzeugkondensator 15, 16 zugeführten elektrischen Leistung in einem schematisch vereinfachten Schaltbild. Der Generator 18 ist mit dem Werkzeugkondensator 15, 16 verbunden. Parallel zum Werkzeugkondensator 15, 16 ist ein Messkondensator 53 geschaltet, dessen elektrische Kapazität einen Bruchteil der elektrischen Kapazität des Werkzeugkondensators 15, 16 beträgt. Der Messkondensator 53 ist über eine Koaxialleitung 54 mit einer Spannungsmesseinrichtung (Voltmeter) 55 verbunden. Vorzugsweise ist parallel zum Messkondensator 53 eine Diode 56 geschaltet. Die Koaxialleitung 54 ist in Reihe mit einer Induktivität 58 geschaltet, welche zum Filtern von Hochfrequenzsignalen dient.

Die aus dem Messkondensator 53 und der Diode 56 ausgebildete Messeinheit ist mittels eines Trennkondensators 59 vom Werkzeugkondensator 15, 16 getrennt. Der Trennkondensator besitzt eine hohe Spannungsfestigkeit. Die Kapazität des Trennkondensators 59 ist kleiner als die Kapazität des Messkondensators 53. Hierdurch fällt am Trennkondensator eine höhere Spannung als am Messkondensator 53 ab. Das Verhältnis der Kapazität des Trennkondensators 59 zur Kapazität des Messkondensators 53 beträgt vorzugsweise 1:100 oder 1:1.000 oder 1:10.000. Hierdurch wird die am Werkzeugkondensator 15, 16 anliegende Spannung in der Messeinheit 53, 56 derart herabgesetzt, dass sie in einem Messbereich der Spannungsmesseinrichtung 55 liegt und von dieser zuverlässig erfasst werden kann.

Bei dieser Schaltung fällt somit am Messkondensator 53 eine Spannung ab, die der am Werkzeugkondensator 15, 16 anliegenden Spannung entspricht und entsprechend dem Verhältnis der Kapazität des Messkondensators 53 bezüglich der Kapazität des Trennkondensators 59 herabgesetzt ist. Durch das Vorsehen der Diode 56 fallen nur die Schwingungshälften einer bestimmten Polung an. Die Diode 56 bildet somit eine Gleichrichtung der am Messkondensator 53 anfallenden Spannung. Diese Messspannung wird mit der Spannungsmesseinrichtung 55 gemessen und in ein Messsignal umgesetzt. Das Messsignal wird an eine Steuereinrichtung 57 weitergeleitet, welche den Generator 18 selbsttätig zur Abgabe einer vorbestimmten elektrischen Leistung steuert, um am Werkzeugkondensator eine bestimmte Spannung bzw. am Messkondensator eine bestimmte Messspannung zu erzeugen, die einen Bruchteil der Spannung am Werkzeugkondensator beträgt.

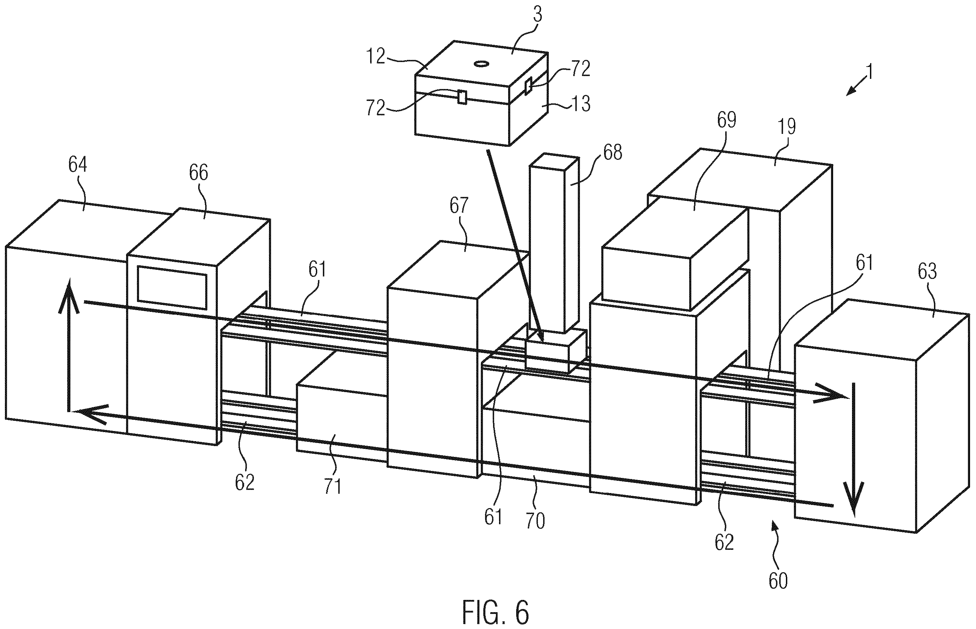

Nachfolgend wird anhand von Figur 6 eine Ausführungsform einer Vorrichtung zur Herstellung von Partikelschaumstoffteilen erläutert. Diese Vorrichtung 1 weist mehrere räumlich voneinander getrennte Arbeitsstationen auf, welche mit einer Transporteinrichtung 60 miteinander verbunden sind. Mit der Transporteinrichtung 60 können mehrere Formwerkzeuge, welche jeweils einen Formraum begrenzen, zwischen den einzelnen Arbeitsstationen bewegt werden.

Die Transporteinrichtung 60 weist eine obere Transportstrecke 61 und eine untere Transportstrecke 62 auf, an welchen die Formwerkzeuge 3 in unterschiedliche Richtung befördert werden. Die beiden Transportstrecken 61, 62 sind parallel zueinander angeordnet und an den Enden der beiden Transportstrecken 61, 62 befindet sich jeweils eine Lifteinrichtung 63, 64, mit welcher die Formwerkzeuge zwischen den Transportebenen nach unten (Lifteinrichtung 63) bzw. nach oben (Lifteinrichtung 64) bewegt werden können. Die beiden Transportstrecken 61, 62 weisen jeweils zwei schmale Förderbänder auf, die parallel zueinander angeordnet sind und auf welchen die Formwerkzeuge 3 aufgelegt werden können.

An der oberen Transportstrecke 61 sind in Förderrichtung 65 eine Entformstation 66, eine Einfügstation 67, eine Füllstation 68 und eine Schweißstation 69 angeordnet. Die Schweißstation umfasst eine Presse mit einer unteren stationären Platte auf Höhe der oberen Transportstrecke 61 und einer oberen beweglichen Platte. Zwischen den beiden Platten (nicht dargestellt) kann jeweils ein Formwerkzeug 3 angeordnet werden und mittels einer Presse, die die beiden Platten betätigt, zusammengedrückt werden. Die beiden Platten sind aus einem elektrisch leitenden Material ausgebildet. Die untere, stationäre Platte ist mit Masse verbunden. Die obere, bewegliche Platte ist mit einem RF-Generator 18 verbunden. Die beiden Platten bilden somit die oben erläuterten Kondensatorplatten 15, 16, welche das Formwerkzeug 3 zwischen sich aufnehmen.

An der unteren Transportstrecke 62 ist ein Kühlabschnitt 70 vorgesehen, an welchen die an der Schweißstation 69 erhitzten Formwerkzeuge und die darin befindlichen Partikelschaumstoffteile abkühlen können. Der Kühlabschnitt 70 kann die Formwerkzeuge 3 allein mit Umgebungsluft kühlen, kann mit einem Gebläse versehen sein, um die Formwerkzeuge 3 mit einem kühlenden Luftstrom zu beaufschlagen und/oder kann eine Kältekammer umfassen, welche mittels eines gekühlten Kühlmediums unter Raumtemperatur gekühlt ist, um den Wärmetransport aus dem Formwerkzeug 3 zu beschleunigen. Der Kühlabschnitt 70 kann gleichzeitig mehrere Formwerkzeuge 3 aufnehmen, da das Kühlen bzw. Stabilisieren des im Formwerkzeug befindlichen Schaumstoffteils der am längsten dauernde Arbeitsschritt ist.

An der unteren Transportstrecke 62 befindet sich ein Formwerkzeugspeichersystem 71, das an ein automatisches Lager zum Speichern mehrerer Formwerkzeuge gekoppelt ist, so dass automatisch in die Transporteinrichtung 60 unterschiedliche Formwerkzeuge ein- bzw. ausgekoppelt werden können.

Die Herstellung eines Partikelschaumstoffteils wird in der Entformstation 66 beendet, in welcher das aus zwei Hälften bestehende Formwerkzeug geöffnet und das darin hergestellte Partikelschaumstoffteil entnommen und ausgegeben wird.

Die Formwerkzeuge 3 weisen einen Schließmechanismus 72 auf, mit welchem die zwei Formhälften des jeweiligen Formwerkzeuges fest miteinander verschlossen sind, wenn sie entlang der Transporteinrichtung 60 gefördert werden. Dieser Schließmechanismus 72 wird in der Entformstation 66 zum Entformen der Partikelschaumstoffteile automatisch geöffnet und danach werden die beiden Formhälften wieder zusammengesetzt und miteinander mittels des Schließmechanismusses 72 verbunden. Der Schließmechanismus verbindet die beiden Formhälften so fest, dass sie während des Transportes nicht auseinandergehen. Der Schließmechanismus kann ein Spiel aufweisen, so dass die beiden Formhälften beim Befüllen etwas auseinander gezogen werden können, um einen Crackspalt zu bilden. Der Schließmechanismus muss nicht dazu dienen, den beim Verschweißen im Formraum entstehenden Druck aufzunehmen. Dieser Druck wird über die Presse in der Schweißstation 69 abgeleitet.

Vorteilhaft an dieser Vorrichtung ist, dass mit einer einzigen Schweißstation ein sehr hoher Durchsatz möglich ist, da das Verschweißen eines Partikelschaumstoffteiles in der Regel nicht länger als 30 Sekunden bis 2 Minuten dauert. Der am längsten dauernde Arbeitsschritt ist das Stabilisieren bzw. Abkühlen des Formwerkzeuges und des darin befindlichen Partikelschaumstoffteils. Da der Kühlabschnitt mehrere Formwerkzeuge gleichzeitig aufnehmen kann, können mehrere Formwerkzeuge gleichzeitig stabilisiert bzw. gekühlt werden. Hierdurch wird die Abarbeitung der Formwerkzeuge in der Schweißstation 69 nicht aufgehalten.

Ein weiterer Vorteil dieser Vorrichtung liegt darin, dass unterschiedliche Werkzeuge, insbesondere mit unterschiedlichen Formräumen gleichzeitig im Umlauf bearbeitet werden können. Vorzugsweise ist ein jedes Formwerkzeug mit einer eigenen maschinenlesbaren Identifikationseinrichtung versehen. Eine solche Identifikationseinrichtung kann bspw. ein Barcode oder ein RFID-Chip sein. Ein oder mehrere entsprechende Lesegeräte zum Lesen der Identifikationseinrichtung sind an der Vorrichtung entlang der Transporteinrichtung 60 angeordnet, so dass eine Steuervorrichtung (nicht dargestellt) weiß, welches Werkzeug sich an welcher Arbeitsstation befindet. Hierdurch können die einzelnen Werkzeuge individuell behandelt werden. Insbesondere können sie an der Schweißstation mit elektromagnetischen Wellen unterschiedlicher Spannung und/oder Dauer beaufschlagt werden. Auch kann die Verweilzeit im Kühlabschnitt und kann die Kühlwirkung bei einer aktiven Kühlung, beispielsweise mittels eines Gebläses, individuell gesteuert werden.

Im Vergleich zu einer herkömmlichen Vorrichtung zur Herstellung von Partikelschaumstoffteilen, in welcher die Schaumstoffpartikel allein mit heißem Dampf verschweißt werden, ist die vorliegende Vorrichtung wesentlich kompakter und wesentlich flexibler ausgebildet, da sie gleichzeitig mehrere unterschiedliche Formwerkzeuge bearbeiten kann. Zudem kann die Energie wesentlich effizienter mittels der elektromagnetischen Strahlung im Formraum eingebracht werden.

Es kann auch zweckmäßig sein, an der Schweißstation eine Wasser- oder Dampfzufuhrleitung vorzusehen, mit welcher Wasser und/oder Dampf dem Formwerkzeug zugeführt wird. Dies ist dann insbesondere von Vorteil, wenn Schaumstoffpartikel verschweißt werden sollen, die bei niedrigen Temperaturen oder generell nur einen geringen dielektrischen Verlustfaktor aufweisen. In einem solchen Fall wird eine geringe Menge Wasser oder Dampf zugeführt. Durch die elektromagnetische Strahlung erhitzt sich das Wasser zu Dampf oder wird der Dampf weiter erhitzt. Dadurch werden die Schaumstoffpartikel auf eine höhere Temperatur erhitzt, bei welcher der dielektrische Verlustfaktor größer ist, wodurch sich dann selbst die elektromagnetische Strahlung absorbieren und sich weiter erhitzen. Es hat sich gezeigt, dass einige wenige 100 g Wasser für einen Formraum mit einem Volumen von 50 Liter genügen. Ist das Schaumstoffpartikelmaterial beispielsweise ePS (expandierbares Polystyrol), dann genügen 300 g oder weniger Wasser zur Erhitzung und Verschweißung der Schaumstoffpartikel in einem Formraum mit einem Volumen von 50 Liter. Bei einer herkömmlichen Verschweißung, bei welcher die Schaumstoffpartikel allein mittels Heißdampf erhitzt werden, sind für einen Formraum mit einem Volumen von 50 Liter Dampfmengen notwendig, die einige Kilo Wasser umfassen.

Es gilt daher grundsätzlich, falls Schaumstoffpartikel verschweißt werden sollen, die elektromagnetische Strahlung nur geringfügig absorbieren, dass dann eine einmalige Zugabe von Wasser in einer Menge von 300 g für einen Formraum mit einem Volumen von 50 Liter genügen. Bei vielen Materialien, die elektromagnetische Strahlung nur geringfügig absorbieren, können auch bereits geringere Mengen an Wasser genügen. Bei Formräumen mit anderen Volumina kann die maximal notwendige Menge an Wasser im gleichen Verhältnis an das Volumen angepasst werden.

Wird Wasser mittels elektromagnetischer Strahlung im Formraum erhitzt, dann ist es zweckmäßig, ein Formwerkzeug zu verwenden, das einen Drucksensor aufweist, mit welchem der im Formraum befindliche Druck gemessen werden kann. Dieser Druck ist proportional zur Temperatur. Die Einstrahlung der elektromagnetischen Strahlung wird dann vorzugsweise nach Maßgabe des gemessenen Druckwertes geregelt, d.h., vorzugsweise auf einen bestimmten Druckwert eingestellt.

Bei dieser Vorrichtung mit der Transporteinrichtung 60 können die weiter oben erläuterten unterschiedlichen Aspekte der Erfindung und insbesondere die unterschiedlichen Formwerkzeuge einzeln oder in Kombination eingesetzt werden.

### Bezugszeichenliste

- 1: Vorrichtung
- 2: Materialbehälter
- 3: Formwerkzeug
- 4: Leitung
- 5: Boden
- 6: Druckluftleitung
- 7: Druckluftquelle
- 8: Treibdüse
- 9: Druckluftleitung
- 10: Füllinjektor
- 11: Druckluftleitung
- 12: Formhälfte
- 13: Formhälfte
- 14: Formraum
- 15: Kondensatorplatte
- 16: Kondensatorplatte
- 17: elektrische Leitung
- 18: Wechselspannungsquelle
- 19: Unterdruckpumpe
- 20: Ventilator
- 21: Kühlrippe
- 22: Heizdraht
- 23: Stromquelle
- 24: Grundkörper
- 25: Grundkörper
- 26: innere Begrenzungsfläche
- 27: innere Begrenzungsfläche
- 28: Beschichtung
- 29: Beschichtung
- 30: Masse
- 31: Bodenwandung
- 32: Seitenwandung
- 33: Einfüllöffnung
- 34: Entlüftungsöffnung
- 35: Gehäuse
- 36: Kolben-/Zylindereinheit
- 37: Bodenwandung
- 38: Seitenwandung
- 39: Stößel
- 40: Anschlagplatte
- 41a: Öffnung
- 41b: Tür
- 42: Isolationskörper
- 43: Isolationskörper
- 44: Halterung
- 45: Isolationskörper
- 46: Leitung
- 47: generatorseitige Induktivität
- 48: werkzeugseitige Induktivität
- 49: werkzeugseitiger Kondensator
- 50: Werkzeugschwingkreis
- 51: generatorseitiger Kondensator
- 52: Generatorschwingkreis
- 53: Messkondensator
- 54: Koaxialleitung
- 55: Voltmeter
- 56: Diode
- 57: Steuereinrichtung
- 58: Induktivität
- 59: Trennkondensator
- 60: Transporteinrichtung
- 61: obere Transportstrecke
- 62: untere Transportstrecke
- 63: Lifteinrichtung
- 64: Lifteinrichtung
- 65: Förderrichtung
- 66: Entformstation
- 67: Einfügstation
- 68: Füllstation
- 69: Schweißstation
- 70: Kühlabschnitt
- 71: Formwerkzeugspeichersystem
- 72: Schließmechanismus

## Patentansprüche

1. Vorrichtung zur Herstellung eines Partikelschaumstoffteils, umfassend
ein Formwerkzeug (3), das einen Formraum (14) begrenzt, wobei benachbart zum Formraum (14) zumindest zwei Kondensatorplatten angeordnet sind, welche mit einer Strahlungsquelle (18) für elektromagnetische Strahlung verbunden sind, wobei die Strahlungsquelle (18) für elektromagnetische Strahlung zum Abgeben von elektromagnetischer Strahlung ausgebildet ist, und
das Formwerkzeug (3) zumindest aus zwei Formhälften (12, 13) ausgebildet ist, wobei die beiden Formhälften (12, 13) den Formraum (14) mittels jeweils einer inneren Begrenzungsfläche (26, 27) begrenzen und zumindest eine der beiden Formhälften aus einem elektrisch leitenden Material ausgebildet ist und eine der Kondensatorplatten bildet, **dadurch gekennzeichnet,**
**dass** die innere Begrenzungsfläche (26, 27) der aus elektrisch leitendem Material ausgebildeten Formhälfte konturiert ist und der Formraum Bereiche unterschiedlicher Dicke aufweist.

2. Vorrichtung nach Anspruch 1,
**dadurch gekennzeichnet,**
**dass** beide Formhälften (12, 13) aus einem elektrisch leitenden Material ausgebildet sind, und jeweils eine der Kondensatorplatten bilden, wobei zumindest in dem Bereich, in welchen die beiden Formhälften aneinander liegen eine Isolationsschicht (28, 29) zum elektrischen Isolieren der beiden Formhälften (12, 13) angeordnet ist.

3. Vorrichtung nach Anspruch 1 oder 2,
**dadurch gekennzeichnet,**
**dass** die zumindest eine elektrisch leitende Formhälfte (12, 13) an ihrer den Formraum begrenzenden Seite mit einer Kunststoffschicht (28, 29) versehen ist.

4. Vorrichtung nach Anspruch 3,
**dadurch gekennzeichnet,**
**dass** die Kunststoffschicht eine Dicke von maximal 1 cm aufweist.

5. Vorrichtung nach Anspruch 3 oder 4,
**dadurch gekennzeichnet,**
**dass** die Kunststoffschicht aus einem für die elektromagnetische Strahlung nicht transparenten Material ausgebildet ist.

6. Vorrichtung nach einem der Ansprüche 1 bis 5,
**dadurch gekennzeichnet,**
**dass** an die zumindest eine elektrisch leitende Formhälfte ein Füllinjektor (10) gekoppelt ist, wobei die elektrisch leitende Formhälfte (12, 13) und der Füllinjektor (10) elektrisch mit Masse verbunden sind.

7. Vorrichtung zur Herstellung eines Partikelschaumstoffteils nach einem der Ansprüche 1 bis 6, **dadurch gekennzeichnet,**
**dass** eine der Formhälften (12, 13) eine Durchgangsöffnung zum Zuführen von Schaumstoffpartikel und/oder eine Durchgangsöffnung zum Entweichen von Luft aufweist, wobei die Durchgangsöffnung im geschlossenen Zustand des Formwerkzeuges von der anderen Formhälfte abgedeckt wird.

8. Vorrichtung nach Anspruch 7,
**dadurch gekennzeichnet**
**dass** an der Durchgangsöffnung zum Zuführen von Schaumstoffpartikel kein zusätzlicher Schließmechanismus zum Schließen der Durchgangsöffnung vorgesehen ist und alleine durch die andere Formhälfte verschließbar ist.

9. Vorrichtung nach einem der Ansprüche 1 bis 8,
wobei die zumindest zwei Kondensatorplatten (15, 16) angeordnet sind, welche einen Werkzeugkondensator bilden, **dadurch gekennzeichnet,**
**dass** eine Spannungsmesseinrichtung (55) zum Messen der am Werkzeugkondensator (15, 16) anliegenden elektrischen Spannung vorgesehen ist, und die Spannungsmesseinrichtung (55) mit einer Steuereinrichtung (57) zum Regeln der elektrischen Leistung anhand der gemessenen Spannung verbunden ist.

10. Vorrichtung nach Anspruch 9,
**dadurch gekennzeichnet,**
**dass** ein Spannungsteiler aus einem Trennkondensator (59) und einem Messkondensator (53) ausgebildet ist, welche eine Reihenschaltung bilden und die Reihenschaltung parallel zum Werkzeugkondensator geschaltet ist, wobei die Spannungsmesseinrichtung (55) die am Messkondensator anliegende Spannung abgreift, wobei vorzugsweise parallel zum Messkondensator (53) eine Diode (56) geschaltet ist.

11. Vorrichtung nach einem der Ansprüche 1 bis 10,
**dadurch gekennzeichnet,**
**dass** die elektromagnetische Strahlungsquelle einen Generatorschwingkreis bildet und Leitungen zum Führen der elektromagnetischen Wellen zusammen mit dem den Formraum umschließenden Kondensator einen Werkzeugschwingkreis bildet, wobei zumindest einer der beiden Schwingkreise durch Verändern einer Induktivität oder einer Kapazität abstimmbar ist, wobei eine Steuereinrichtung vorgesehen ist, die derart ausgebildet ist, dass die Leistungszufuhr vom Generatorschwingkreis auf den Werkzeugschwingkreis durch Abstimmen des abstimmbaren Schwingkreises gesteuert wird.

12. Vorrichtung nach einem der Ansprüche 1 bis 11,
**dadurch gekennzeichnet,**
**dass** die elektromagnetische Strahlung RF-Strahlung ist, und/oder dass eine der beiden Kondensatorplatten elektrisch mit Masse verbunden ist.

13. Vorrichtung nach einem der Ansprüche 1 bis 12, **dadurch gekennzeichnet**,
das Formwerkzeug mit Kühlrippen versehen ist.

14. Vorrichtung zur Herstellung eines Partikelschaumstoffteils nach einem der Ansprüche 1 bis 13, **dadurch gekennzeichnet,**
**dass** die Vorrichtung mehrere Arbeitsstationen umfasst, zwischen welchen mehrere Formwerkzeuge mittels einer Transporteinrichtung im Kreislauf befördert werden, wobei zumindest folgende Arbeitsstationen vorgesehen sind:
- eine Füllstation, an welcher das Formwerkzeug mit Schaumstoffpartikel gefüllt wird,
- eine Schweißstation, an welcher die im Formwerkzeug befindlichen Schaumstoffpartikel mittels elektromagnetischer Strahlung verschweißt werden,
- zumindest eine oder mehrere Abkühlstationen zum Abkühlen des verschweißten Partikelschaumstoffteils, und
- eine Entformstation.

15. Vorrichtung nach Anspruch 14,
**dadurch gekennzeichnet,**
**dass** die Transporteinrichtung eine die Formwerkzeuge im Kreislauf befördernde Transporteinrichtung ist, und/oder dass ein Abkühlbereich entlang der Transporteinrichtung vorgesehen ist, wobei der Abkühlbereich gleichzeitig mehrere Formwerkzeuge aufnehmen kann.

## Claims

1. A device for producing a particle foam part, comprising
a molding tool (3) which delimits a mold cavity (14), at least two capacitor plates being arranged adjacent to the mold cavity (14) and connected to a radiation source (18) for electromagnetic radiation, the radiation source (18) for electromagnetic radiation being designed to emit electromagnetic radiation, and
the molding tool (3) being formed from at least two mold halves (12, 13), the two mold halves (12, 13) delimiting the mold cavity (14) by means of an inner boundary surface (26, 27) in each case and at least one of the two mold halves being formed from an electrically conductive material and forming one of the capacitor plates, **characterized in that**
the inner boundary surface (26, 27) of the mold half formed from electrically conductive material is contoured and the mold cavity comprises regions of different thicknesses.

2. The device according to claim 1,
**characterized in that**
both mold halves (12, 13) are formed from an electrically conductive material and form one of the capacitor plates in each case, an insulating layer (28, 29) for electrically insulating the two mold halves (12, 13) being arranged at least in the region in which the two mold halves adjoin each other.

3. The device according to claim 1 or 2,
**characterized in that**
the at least one electrically conductive mold half (12, 13) is provided with a plastic layer (28, 29) on its side delimiting the mold cavity.

4. The device according to claim 3,
**characterized in that**
the plastic layer has a thickness of at most 1 cm.

5. The device according to claim 3 or 4,
**characterized in that**
the plastic layer is formed from a material which is not transparent to the electromagnetic radiation.

6. The device according to any one of claims 1 to 5,
**characterized in that**
a filling injector (10) is coupled to the at least one electrically conductive mold half, the electrically conductive mold half (12, 13) and the filling injector (10) being electrically connected to ground.

7. The device for producing a particle foam part according to any one of claims 1 to 6, **characterized in that**
one of the mold halves (12, 13) comprises a through-opening for supplying foam particles and/or a through-opening for allowing air to escape, the through-opening being covered by the other mold half in the closed state of the molding tool.

8. The device according to claim 7,
**characterized in that**
no additional closing mechanism for closing the through-opening is provided at the through-opening for supplying foam particles and can be closed solely by the other mold half.

9. The device according to any one of claims 1 to 8,
wherein the at least two capacitor plates (15, 16) are arranged so as to form a tool capacitor, **characterized in that**
a voltage measuring device (55) is provided for measuring the electrical voltage present at the tool capacitor (15, 16), and the voltage measuring device (55) is connected to a control device (57) for regulating the electrical power on the basis of the measured voltage.

10. The device according to claim 9,
**characterized in that**
a voltage divider is formed from an isolating capacitor (59) and a measuring capacitor (53), which form a series circuit, and the series circuit is connected in parallel with the tool capacitor, the voltage measuring device (55) tapping off the voltage present at the measuring capacitor, a diode (56) being connected preferably in parallel with the measuring capacitor (53).

11. The device according to any one of claims 1 to 10,
**characterized in that**
the electromagnetic radiation source forms a generator resonant circuit and lines for guiding the electromagnetic waves together with the capacitor surrounding the mold cavity form a tool resonant circuit, at least one of the two resonant circuits being tunable by changing an inductance or a capacitance, a control device being provided which is designed such that the power supply from the generator resonant circuit to the tool resonant circuit is controlled by tuning the tunable resonant circuit.

12. The device according to any one of claims 1 to 11,
**characterized in that**
the electromagnetic radiation is RF radiation and/or one of the two capacitor plates is electrically connected to ground.

13. The device according to any one of claims 1 to 12,
**characterized in that**
the molding tool is provided with cooling fins.

14. The device for producing a particle foam part according to any one of claims 1 to 13, **characterized in that**
the device comprises a plurality of work stations between which several molding tools are conveyed in circulation by means of a transport device, at least the following work stations being provided:
- a filling station at which the molding tool is filled with foam particles,
- a welding station at which the foam particles located in the molding tool are welded by means of electromagnetic radiation,
- at least one or more cooling stations for cooling the welded particle foam part, and
- a demolding station.

15. The device according to claim 14,
**characterized in that**
the transport device is a transport device that conveys the molding tools in circulation, and/or that a cooling zone is provided along the transport device, the cooling zone being capable of receiving several molding tools at the same time.

## Revendications

1. Dispositif de production d'un élément en mousse de particules expansées, comprenant
un outil de moulage (3) qui délimite une cavité de moulage (14), au moins deux plaques de condensateur étant disposées à côté de la cavité de moulage (14) et connectées à une source de rayonnement (18) pour le rayonnement électromagnétique, la source de rayonnement (18) pour le rayonnement électromagnétique étant conçue pour émettre un rayonnement électromagnétique, et
l'outil de moulage (3) étant formé d'au moins deux moitiés de moule (12, 13), les deux moitiés de moule (12, 13) délimitant la cavité de moulage (14) au moyen d'une surface de délimitation intérieure (26, 27) dans chaque cas et au moins une des deux moitiés de moule étant formée d'un matériau électriquement conducteur et formant l'une des plaques de condensateur, **caractérisé en ce que**
la surface de délimitation intérieure (26, 27) de la moitié de moule formée d'un matériau électriquement conducteur est profilée et la cavité de moulage comprend des zones d'épaisseurs différentes.

2. Le dispositif selon la revendication 1,
**caractérisé en ce que**
les deux moitiés de moule (12, 13) sont constituées d'un matériau électriquement conducteur et forment chacune une des plaques de condensateur, une couche isolante (28, 29) destinée à isoler électriquement les deux moitiés de moule (12, 13) étant disposée au moins dans la zone où les deux moitiés de moule sont adjacentes l'une à l'autre.

3. Le dispositif selon la revendication 1 ou 2,
**caractérisé en ce que**
l'au moins une moitié de moule (12, 13) électriquement conductrice est pourvue d'une couche de plastique (28, 29) sur son côté délimitant la cavité de moulage.

4. Le dispositif selon la revendication 3,
**caractérisé en ce que**
la couche de plastique a une épaisseur d'au plus 1 cm.

5. Le dispositif selon la revendication 3 ou 4,
**caractérisé en ce que**
la couche de plastique est formée d'un matériau qui n'est pas transparent au rayonnement électromagnétique.

6. Le dispositif selon l'une des revendications 1 à 5,
**caractérisé en ce que**
un injecteur de remplissage (10) est couplé à l'au moins une moitié de moule électriquement conductrice, la moitié de moule électriquement conductrice (12, 13) et l'injecteur de remplissage (10) étant électriquement connectés à la terre.

7. Le dispositif de production d'un élément en mousse de particules expansées selon l'une quelconque des revendications 1 à 6,
**caractérisé en ce que**
l'une des moitiés de moule (12, 13) comprend une ouverture de passage pour l'alimentation en particules de mousse et/ou une ouverture de passage pour l'évacuation de l'air, l'ouverture de passage étant recouverte par l'autre moitié de moule à l'état fermé de l'outil de moulage.

8. Le dispositif selon la revendication 7,
**caractérisé en ce que**
aucun mécanisme de fermeture supplémentaire pour fermer l'ouverture de passage n'est prévu au niveau de l'ouverture de passage pour l'alimentation en particules de mousse et qu'elle peut être fermée uniquement par l'autre moitié de moule.

9. Le dispositif selon l'une des revendications 1 à 8,
sachant que les au moins deux plaques de condensateur (15, 16) sont disposées de manière à former un condensateur d'outil, **caractérisé en ce que**
un dispositif de mesure de la tension (55) est prévu pour mesurer la tension électrique présente au niveau du condensateur d'outil (15, 16), et le dispositif de mesure de la tension (55) est connecté à un dispositif de commande (57) pour réguler la puissance électrique sur la base de la tension mesurée.

10. Le dispositif selon la revendication 9,
**caractérisé en ce que**
un diviseur de tension est formé d'un condensateur d'isolement (59) et d'un condensateur de mesure (53), qui forment un circuit en série, et le circuit en série est connecté en parallèle avec le condensateur d'outil, le dispositif de mesure de la tension (55) prélevant la tension présente au niveau du condensateur de mesure, une diode (56) étant de préférence connectée en parallèle avec le condensateur de mesure (53).

11. Le dispositif selon l'une quelconque des revendications 1 à 10,
**caractérisé en ce que**
la source de rayonnement électromagnétique forme un circuit résonnant de générateur et des lignes de guidage des ondes électromagnétiques forment, en combinaison avec le condensateur entourant la cavité de moulage, un circuit résonnant d'outil, au moins l'un des deux circuits résonnants étant accordable par modification d'une inductance ou d'une capacité, un dispositif de commande étant prévu, qui est conçu de telle sorte que l'alimentation électrique du circuit résonnant de générateur vers le circuit résonnant d'outil est commandée par l'accord du circuit résonnant accordable.

12. Le dispositif selon l'une des revendications 1 à 11,
**caractérisé en ce que**
le rayonnement électromagnétique est un rayonnement RF et/ou l'une des deux plaques de condensateur est connectée électriquement à la terre.

13. Le dispositif selon l'une des revendications 1 à 12,
**caractérisé en ce que**
l'outil de moulage est pourvu d'ailettes de refroidissement.

14. Le dispositif de production d'un élément en mousse de particules expansées selon l'une quelconque des revendications 1 à 13,
**caractérisé en ce que**
le dispositif comprend une pluralité de stations de travail entre lesquelles plusieurs outils de moulage sont acheminés en circulation au moyen d'un dispositif de transport, au moins les stations de travail suivantes étant prévues :
- une station de remplissage où l'outil de moulage est rempli de particules de mousse,
- une station de soudage où les particules de mousse situées dans l'outil de moulage sont soudées au moyen d'un rayonnement électromagnétique,
- au moins une ou plusieurs stations de refroidissement pour refroidir l'élément en mousse de particules expansées soudé, et
- une station de démoulage.

15. Le dispositif selon la revendication 14,
**caractérisé en ce que**
le dispositif de transport est un dispositif de transport qui transporte les outils de moulage en circulation, et/ou qu'une zone de refroidissement est prévue le long du dispositif de transport, la zone de refroidissement pouvant recevoir plusieurs outils de moulage en même temps.
